# EUROPEAN PATENT APPLICATION

(11) **EP 4 752 467 A2**
(43) Date of publication of application: **03.06.2026**
(21) Application number: 25219197.8
(22) Date of filing: 27.11.2025
(51) Int. Cl.: F25B 49/02

(54) **HEATING, VENTILATION, AND AIR CONDITOINING WITH THERMAL ENERGY STORAGE**

(30) Priority: 27.11.2024 US 202463726039 P; 18.07.2025 US 202563846739 P
(71) Applicant: Carrier Corporation, Palm Beach Gardens, FL 33418 (US)
(72) Inventor: WANG, Chaojie, Shanghai 201206 (CN); SHEN, Guangyu, Shanghai 201206 (CN); ZHANG, Xinglei, Shanghai 201206 (CN); SHEN, Lingfeng, Shanghai 201206 (CN); LU, Jingyun, Shanghai 201206 (CN); SHI, Runfu, Shanghai 201206 (CN); KOZ, Mustafa, East Syracuse 13057 (US); GHAZVINI, Mahyar, East Syracuse 13057 (US); VAN HASSEL, Bart, Palm Beach Gardens 33418 (US); MAKWINSKI, Mark, Palm Beach Gardens 33418 (US)
(74) Representative: Dehns

(57) **Abstract**

Described herein is a heating, ventilation, and air conditioning (HVAC) system (100) coupled to a domestic hot water (DHW) system (130). The HVAC system (100) includes an indoor unit (120), at least one of the DHW system (130) and/or a thermal energy storage module (140), an outdoor unit (110) having a compressor (112) and an outdoor heat exchanger (116), and a flow control assembly (114) configured to selectively fluidically couple any or a combination of the indoor unit (120), the DHW system (130), the compressor (112), the thermal energy storage module (140), and/or the outdoor heat exchanger (116), among other components.

## Description

### CROSS-REFERENCE TO RELATED APPLICATION

This patent application claims the benefit of U.S. Provisional Patent Application No. 63/846,739, filed on July 18, 2025, and U.S. Provisional Patent Application No. 63/726,039, filed on November 27, 2024, which are incorporated by reference herein in their entirety.

### BACKGROUND

The subject disclosure relates to heating, ventilation, and air conditioning (HVAC) systems, and more particularly, to HVACs integrated with thermal energy storage (TES) modules for space heating and domestic hot water (DHW) systems.

### SUMMARY

In an aspect of the invention there is provided a heating, ventilation, and air conditioning system coupled to a domestic hot water system, the heating, ventilation, and air conditioning system comprising an indoor unit, at least one of the DHW system and/or a thermal energy storage module, an outdoor unit comprising a compressor and an outdoor heat exchanger, and a flow control assembly comprising a first reversing valve and a second reversing valve, wherein the first reversing valve is configured to selectively fluidically couple at least two of the indoor unit, the domestic hot water system, the compressor, and/or the second reversing valve, and wherein the second reversing valve is configured to selectively fluidically couple at least two of the thermal energy storage module, the compressor, the outdoor heat exchanger, and/or the first reversing valve.

In another aspect of the invention there is provided a heating, ventilation, and air conditioning system comprising an indoor unit, a domestic hot water system, an outdoor unit, and a thermal energy storage module comprising a heating load assembly comprising a heating load thermal energy storage, and/or a cooling load assembly comprising a cooling load thermal energy storage, wherein the heating load assembly and the cooling load assembly are in selective fluidic communication with at least one of the domestic hot water system, the indoor unit, or the outdoor unit.

In another aspect of the invention there is provided a heating, ventilation, and air conditioning system comprising an indoor unit, a domestic hot water system, an outdoor unit, and a thermal energy storage module comprising a heating load thermal energy storage and a cooling load thermal energy storage, and a flow control assembly comprising at least one flow selection valve and/or at least one diversion valve configured to selectively enable fluidic communication between the thermal energy storage module and at least one of the domestic hot water system, the indoor unit, or the outdoor unit.

In any of the aspects or embodiments described above or herein, the first reversing valve may be configured to enable selective fluidic communication to a suction line of the compressor from the IDU, the DHW system, the TES module, and/or the outdoor heat exchanger.

In any of the aspects or embodiments described above or herein, the first reversing valve may be configured to enable selective fluidic communication from a discharge line of the compressor to the IDU, the DHW system, the TES module, and/or the outdoor heat exchanger.

In any of the aspects or embodiments described above or herein, the second reversing valve may be configured to enable selective fluidic communication to a suction line of the compressor from the TES module, the IDU, the DHW, or the outdoor heat exchanger.

In any of the aspects or embodiments described above or herein, the second reversing valve may be configured to enable selective fluidic communication from a discharge line of the compressor, via the first reversing valve, to the outdoor heat exchanger, the IDU, the DHW system, or the TES module.

In any of the aspects or embodiments described above or herein, the second reversing valve may be configured to enable selective fluidic communication from the outdoor heat exchanger, the IDU, the DHW system, and/or the TES module to a suction line of the compressor via the first reversing valve.

In any of the aspects or embodiments described above or herein, the flow control assembly may be disposed within the ODU.

In any of the aspects or embodiments described above or herein, the HVAC system may further comprise at least one flow selection valve disposed on a fluidic connection between at least one of: the outdoor heat exchanger, the IDU, or the DHW system, and at least one of: the ODU or the TES module.

In any of the aspects or embodiments described above or herein, at least one of: the IDU or the DHW system may comprise a corresponding bypass assembly. In any of the aspects or embodiments described above or herein, the bypass assembly may comprise at least one diversion line; and at least one flow selection valve corresponding to the at least one diversion line. The at least one flow selection valve may be configured to enable selective fluidic communication between at least one of: the outdoor heat exchanger, the IDU, or the DHW system, and at least one of: the ODU or the TES module.

In any of the aspects or embodiments described above or herein, the at least one flow selection valve may comprise at least one of: a three-way valve or a solenoid valve assembly.

In any of the aspects or embodiments described above or herein, the IDU may be in selective fluidic communication with the corresponding bypass assembly of the DHW system. In any of the aspects or embodiments described above or herein, the DHW system may be in selective fluidic communication with the corresponding bypass assembly of the IDU.

In any of the aspects or embodiments described above or herein, the DHW system may comprise a DHW TES and at least one flow selection valve configured to enable selective fluidic communication between the DHW TES and at least one of: the IDU, the TES module, or the ODU.

In any of the aspects or embodiments described above or herein, the IDU may comprise an indoor heat exchanger and at least one flow selection valve configured to enable selective fluidic communication between the indoor heat exchanger and at least one of: the DHW system, the TES module, or the ODU.

In any of the aspects or embodiments described above or herein, the HVAC system may further comprise a controller configured to shift the HVAC system between a plurality of operational modes, wherein the plurality of operational modes comprise any or a combination of: a space conditioning mode, a TES conditioning mode, and a DHW TES conditioning mode.

In any of the aspects or embodiments described above or herein, the controller may be further configured to select an operational mode from the plurality of operational modes based on at least one of: a space conditioning demand, a domestic hot water demand, cost of power, a thermal energy level of the TES module, or a thermal energy level of the DHW system.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the subject disclosure, and are incorporated into and constitute a part of this specification. The drawings illustrate exemplary embodiments of the subject disclosure and, together with the description, serve to explain the principles of the subject disclosure.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates a thermal energy storage (TES) module integrated into a heating, ventilation, and air conditioning (HVAC) system coupled to a domestic hot water (DHW) system.
FIG. 1B illustrates an isolated representation of an outdoor side of an HVAC system.
FIG. 1C illustrates an isolated representation of a flow control assembly of an HVAC system.
FIG. 1D illustrates an isolated representation of an indoor side of an HVAC system.
FIGs. 2A to 2I illustrate operational modes of an HVAC system integrated with a TES module.
FIGs. 3A and 3B illustrate another HVAC system coupled to a DHW system and integrated with a TES module.
FIGs. 4A to 4J illustrate operational modes of another HVAC system coupled to the DHW system and integrated with a TES module.
FIGs. 5A and 5B illustrate yet another HVAC system coupled to a DHW system and integrated with a TES module.
FIGs. 6A to 6J illustrate operational modes of yet another HVAC system coupled to the DHW system and integrated with a TES module.

### DETAILED DESCRIPTION

The following is a detailed description of embodiments of the disclosure depicted in the accompanying drawings. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the invention as defined by the appended claims.

Various terms are used herein. To the extent a term used in a claim is not defined below, it should be given the broadest definition that persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the subject disclosure, the components of this disclosure may be positioned in any desired orientation. Thus, the use of terms such as "above," "below," "upper," "lower," "first," "second," or other like terms to describe a spatial relationship between various components or to describe the spatial orientation of aspects of such components should be understood to describe a relative relationship between the components or a spatial orientation of aspects of such components.

The use of the term "about" with reference to a numerical value includes ±15% of the numerical value.

As used herein, "substantially" means largely or considerably, but not necessarily wholly, or sufficiently to work for the intended purpose. The term "substantially" thus allows for minor, insignificant variations from an absolute or perfect state, dimension, measurement, result, or the like as would be expected by a person of ordinary skill in the art, but that do not appreciably affect overall performance.

Heating, ventilation, and air conditioning (HVAC) systems are widely used for providing space conditioning, such as cooling and heating, for residential and commercial buildings. HVAC systems may include an outdoor unit (ODU) and an indoor unit (IDU) fluidically coupled by a fluid loop. Utility devices such as domestic hot water (DHW) systems may also be used along with HVAC systems for heating and/or cooling water used for different utilities. Fluids used for space heating may also be routed through the DHW system for heating or cooling water. Often, the operation of the HVAC systems and the DHW systems coincide with periods of high energy demand on the electrical grid, which may present challenges for energy efficiency and grid stability. To address the mismatch between energy supply and demand, thermal energy storage (TES) systems/modules can be used to store thermal energy during off-peak periods (e.g., when electricity rates are lower or renewable energy is abundant) and discharge the stored energy during peak demand periods. Similarly, the DHW system may also include corresponding TES modules for storing energy during valley/off-peak periods and discharge the TES module during peak demand periods.

However, integrating a TES system with a conventional HVAC system often requires substantial modifications to the components of the HVAC and internal fluid loop circuitry of the ODU and/or the IDU. For example, additional valves may need to be installed within the ODU, and internal piping may need to be re-routed. Such modifications may be costly, complex, and do not support retrofitting of the TES into existing HVAC systems coupled to DHW systems.

The subject disclosure provides for the integration of a TES module with a HVAC system coupled to a DHW system. The HVAC system includes an indoor unit (IDU) coupled to the DHW system, a TES module, an outdoor unit (ODU) including a compressor and an outdoor heat exchanger. Further, the HVAC system includes a flow control assembly. The flow control assembly may be configured to selectively enable fluidic communication between the compressor and at least one of: the IDU, the DHW system, the ODU, and the TES module, to allow the HVAC system to operate in a plurality of operational modes involving any or a combination of space heating or cooling, TES charging or discharging, and/or DHW TES charging or discharging.

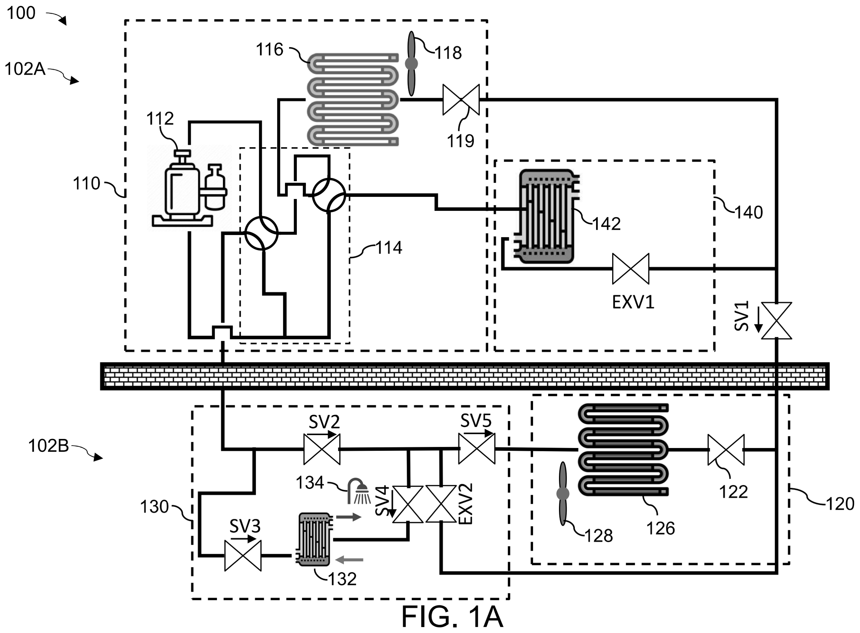

Various embodiments of the subject disclosure are described in detail in reference to FIGs. 1A to 6J.

Referring to FIGs. 1A to 1D, schematic diagrams of a HVAC system 100 are shown. The HVAC system 100 may include an ODU 110 and an IDU 120. In one or more embodiments, the HVAC system 100 may include at least one utility device, such as a TES module 140, and/or a DHW system 130, but not limited thereto. While the subject disclosure is described in the context of the utility device coupled to or included in the HVAC system 100 having the TES module 140 and/or the DHW system 130, it may be appreciated that any one, both, or other utility devices may be suitably included in or coupled to the HVAC system 100 within the scope of the invention. The HVAC system 100 may be configured to operate in a split configuration, with certain components located in an outdoor environment/side 102A and other components located in an indoor environment/side 102B (corresponding to an indoor space, such as a room of a building, or a container). FIGs. 1A to 1D illustrate an embodiment where the ODU 110, the flow control assembly 114, and/or the TES module 140 are located in the outdoor environment 102A, and where the IDU 120 and the DHW system 130 are located in the indoor environment 102B.

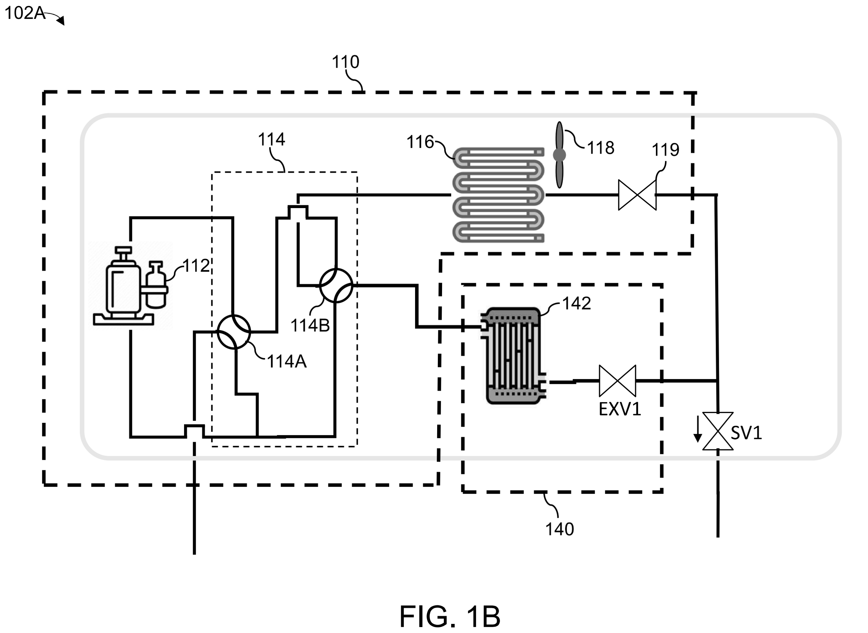

Referring to FIG. 1B, in one or more embodiments, the ODU 110 may include an outdoor heat exchanger 116, an outdoor fan 118, an outdoor expansion device 119, and a compressor 112 (and/or a refrigeration pump). The compressor 112 may be configured to compress and circulate a fluid through a fluid loop of the HVAC system 100. In one or more embodiments, the compressor 112 may include any suitable single or multistage compressor including, but not limited to, a screw compressor, reciprocating compressor, centrifugal compressor, scroll compressor, rotary compressor, and/or axial-flow compressor. The fluid loop may fluidically couple different components of the HVAC system 100. The compressor 112 may be configured to pressurize the fluid, and circulate the fluid through the fluid loop. In other embodiments, the refrigeration pump may be configured to circulate liquid fluid/refrigerant through the HVAC system 100. In one or more embodiments, the refrigeration pump may be disposed on a different portion of the fluid than the compressor 112, such as on a liquid line of the fluid loop.

In one or more embodiments, the compressor 112 may be fluidically coupled to the outdoor heat exchanger 116 via the flow control assembly 114. The outdoor heat exchanger 116 may be configured to function as a condenser during some operational modes (such as a cooling mode to reject heat to the outdoor environment 102A), and/or as an evaporator during other modes (such as a heating mode to absorb heat from the outdoor environment 102A). In one or more embodiments, the outdoor heat exchanger 116 may include any suitable type of heat exchanger configured to transfer heat between a working fluid (such as a refrigerant) and air or another medium. For example, the outdoor heat exchanger 116 may include one or more coils of thermally conductive material, such as copper, aluminum, alloys thereof, or combinations thereof. In other embodiments, the outdoor heat exchanger 116 may be a round-tube plate fin, microchannel, shell-and-tube heat exchanger, a printed circuit heat exchanger, a plate-fin heat exchanger, or any combination thereof. The outdoor fan 118 may be configured to generate a flow of ambient air across the outdoor heat exchanger 116 to facilitate heat exchange.

In one or more embodiments, the outdoor expansion device 119 may be fluidically coupled to the outdoor heat exchanger 116. In one or more embodiments, the outdoor expansion device 119 may be fluidically coupled to the IDU 120, the DHW system 130, or the TES module 140. The fluid may be selectively allowed to flow through the outdoor expansion device 119, based on the operational mode of the HVAC 100. In one or more embodiments, the outdoor expansion device 119 may be configured to reduce the pressure of (or expand) the fluid. In one or more embodiments, the outdoor expansion device 119 may be configured to expand the fluid before the fluid enters the outdoor heat exchanger 116, such as when the outdoor heat exchanger 116 is operating as an evaporator. In one or more embodiments, the outdoor expansion device 119 may be configured to expand the fluid after the fluid enters the outdoor heat exchanger 116, such as when the outdoor heat exchanger 116 is operating as a condenser. In one or more embodiments, the outdoor expansion device 119 may be disposed at a conduit, pipe, channel, or passage connecting the ODU 110 or the TES module 140 to the IDU 120, or the DHW system 130.

The TES module 140 may be disposed on the outdoor environment 102A. In one or more embodiments, the TES module 140 may include a TES 142. In one or more embodiments, the TES module 140 may include a TES/first expansion device EXV1. The TES 142 may be configured to store and release thermal energy. In one or more embodiments, the fluid loop may be routed through the TES 142. In such embodiments, the fluid loop may thermally couple the fluid, such as a refrigerant, with the TES 142, when the fluid is circulated through the fluid loop. The TES 142 may be thermally coupled to the fluid, such as through pipes and/or conduits of the fluid loop that facilitate heat exchange between the refrigerant and the TES 142. In one or more embodiments, the TES 142 may be charged (i.e., causing thermal energy to be stored) when hot/heated fluid is flowed through the TES 142. In one or more embodiments, the TES 142 may be charged with cool energy (i.e., thermal energy is removed) when cold refrigerant is flowed through the TES 142.

In one or more embodiments, the TES 142 may be configured for latent heat storage and/or sensible heat storage. In one or more embodiments, for latent heat storage, the TES 142 may include a phase change material (PCM). The PCM may include any one or a combination of salts, polymers, gels, paraffin waxes, metal alloys, semiconductor-metal alloys, water, salt hydrates, bio-based materials and the like, but not limited thereto. The TES 142 may be configured to store and release energy at a nearly constant temperature during phase transition. In such embodiments, the TES 142 may be structured as a heat exchanger immersed within the PCM. In one or more embodiments, for sensible heat storage, the TES 142 may include sensible heat storage materials such as water or solid media, where energy is stored by changing the temperature of the sensible heat storage materials. The TES 142 may be constructed as a single unit or as a plurality of modular blocks to provide scalable storage capacity.

In one or more embodiments, the TES expansion device EXV1 may be configured to control the flow of the fluid from and to the TES 142. The TES expansion device EXV1 may be configured to expand the fluid flowed through the TES expansion device EXV1. In one or more embodiments, the TES expansion device EXV1 may be controlled based on the operational mode in which the HVAC 100 is to be operated.

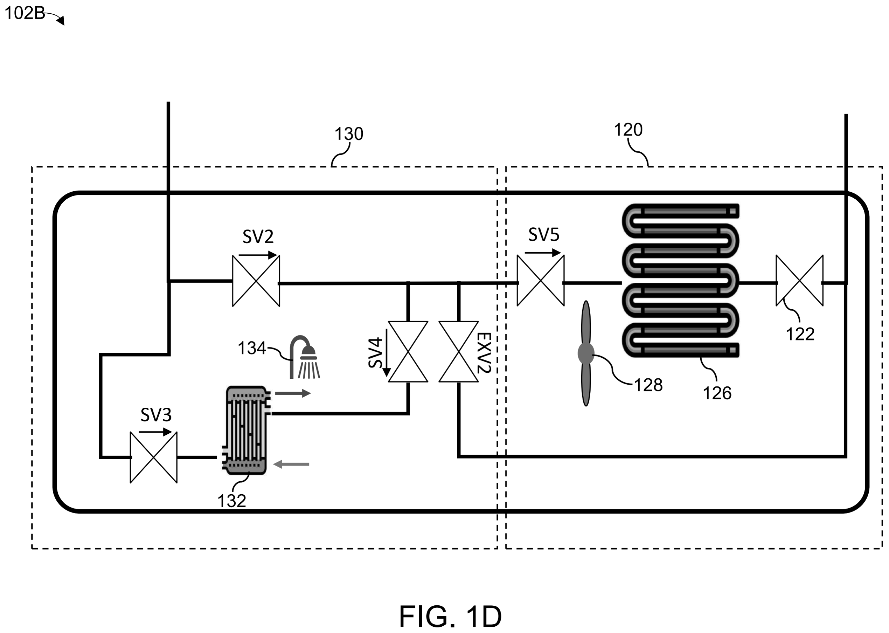

In one or more embodiments, referring to FIG. 1D, the IDU 120 and the DHW system 130 may be located in the indoor environment 102B. The IDU 120 may include an indoor heat exchanger 126, an indoor fan 128, and an indoor expansion device 122 (such as a thermostatic expansion valve, TXV). The indoor heat exchanger 126 may function as an evaporator during some operational modes (such as space cooling modes) to absorb heat from the indoor air/environment 102B, and as a condenser during other operational modes (such as heating modes) to reject heat into the indoor air/environment 102B. In one or more embodiments, the indoor fan 128 may be configured to circulate indoor air across the indoor heat exchanger 126. In one or more embodiments, the indoor heat exchanger 126, the indoor fan 128, and/or the indoor expansion device 122 may be implemented similarly to the outdoor heat exchanger 116, the outdoor fan 118, and/or the outdoor expansion device 119, respectively.

In one or more embodiments, the IDU 120 may be fluidically coupled to the DHW system 130. In one or more embodiments, the DHW system 130 may include a DHW TES module 132. The DHW TES module 132 may be implemented similarly to the TES 142. The DHW TES module 132 may be configured to store and discharge energy. In one or more embodiments, the fluid loop routed through the ODU 110 and/or the IDU 120 may also be selectively in fluidic communication with the DHW TES 132 for charging/storing energy. In such embodiments, the fluid loop may be routed through the DHW TES 132. Further, a utility fluid loop, such as water loop, may also be routed through the DHW TES 132. Utility fluid, such as water, circulated through the utility fluid loop may be used for discharging energy from the DHW TES 132. Alternatively, or additionally, the fluid through the fluid loop may be circulated in a reverse direction, for discharging or removing energy from the DHW TES 132.

In one or more embodiments, the DHW system 130 may include at least one utility 134. The utility 134 may correspond to taps, faucets, shower heads, heat exchangers, laundry machines, dishwashers, and the like, but not limited thereto. The utility fluid loop may be fluidically coupled to the utility 134, and/or a reservoir (not shown) through which the utility fluid may be sourced. In some embodiments, the DHW TES 132 may be used to store heat during valley periods (i.e., when demand on power grid is below a threshold or below average levels), and deliver heat to the utility fluid during peak demand periods (i.e., when the demand on the power grid is greater than the threshold or above the average level).

In one or more embodiments, the HVAC system 100 may be configured in a split arrangement, where certain components are disposed in an outdoor environment 102A and other components are disposed in an indoor environment 102B. As shown in FIG. 1A, the ODU 110 and the TES module 140 may be located in the outdoor environment 102A. The IDU 120 and the DHW system 130 may be located in the indoor environment 102B.

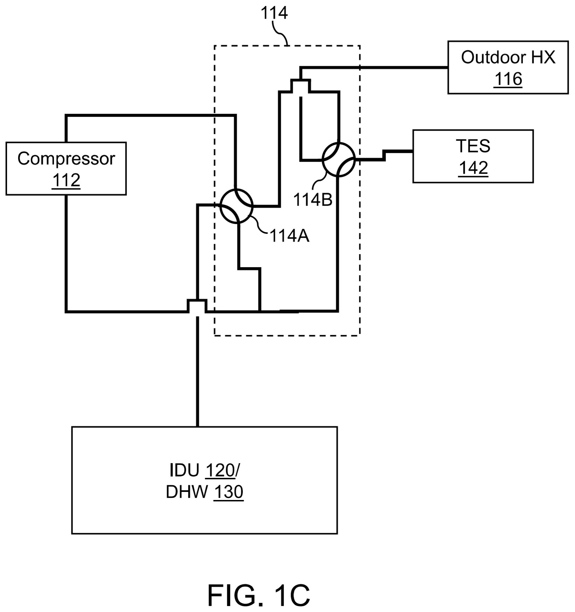

In one or more embodiments, the components in the outdoor environment 102A may be fluidically coupled to the components in the indoor environment 102B through at least two primary fluid lines. The ODU 110 may be fluidically coupled to the TES module 140 via the flow control assembly 114, as depicted in the isolated representation of FIG. 1C. The flow control assembly 114 may be configured to manage the circulation of a fluid, such as a refrigerant, between the ODU 110, the TES module 140, and the components in the indoor environment 102B.

In one or more embodiments, referring to FIG. 1D, the IDU 120 and the DHW system 130 may be fluidically coupled to each other. In some operational modes, the fluid may be configured to flow sequentially through both the IDU 120 and the DHW system 130. For instance, the fluid may first pass through the IDU 120 for space conditioning and then be directed to the DHW system 130 for heating energy storage in DHW TES 132, or vice versa. In another instance, the fluid may first pass through the DHW system 130 for directly heating water or other utility.

In other embodiments, the IDU 120 and the DHW system 130 may be fluidically coupled such that the fluid flows through the IDU 120 and/or the DHW system 130 in alternative. In one or more embodiments, the IDU 120 and/or the DHW system 130 may include a bypass assembly. The bypass assembly may include one or more diversion lines and corresponding flow selection valves (such as solenoid valves SV2, SV3, SV4, SV5, and/or expansion valve EXV2). In one or more embodiments, the IDU 120 may be in selective fluidic communication with the corresponding bypass assembly of the DHW system 130. In one or more embodiments, the DHW system 130 may be in selective fluidic communication with the corresponding bypass assembly of the IDU 120. The flow selection valves may be actuated to selectively direct the fluid through a corresponding component (such as the indoor heat exchanger 126 or the DHW TES 132) or to bypass the corresponding component. For example, the valves SV2, SV3, and/or SV5 may be configured to direct the fluid through the DHW TES 132 or to divert the fluid around the DHW TES 132. Similarly, the valves SV5 and/or the EXV2 may be configured to direct the fluid through the indoor heat exchanger 126 of the IDU 120 or to bypass the indoor heat exchanger 126. Such arrangement allows for flexible operation, regardless of the overall direction of fluid flow.

Referring back to FIGs. 1A to 1D, in one or more embodiments, the arrangement of the components allows for multiple fluid flow paths depending on the desired operational mode. For example, in some operational modes, the fluid may be circulated from the TES module 140 on the outdoor side 102A, to the IDU 120, then to the DHW system 130, and subsequently back to the ODU 110. In other operational modes, the direction of flow may be reversed, where fluid flows from the ODU 110, through the DHW system 130 and the IDU 120, and then to the TES module 140. In additional embodiments, the flow path may originate at the ODU 110, proceed to the IDU 120 and the DHW system 130, and then return to the TES module 140 before completing the circuit at the ODU 110. In further embodiments, the components of the outdoor side 102A and the indoor side 102B may be fluidically isolated from each other. Such arrangements/configurations may be used, for example, during a dedicated heat charge or cool charge mode for the TES module 140, where the fluid circulates only between the ODU 110 and the TES module 140.

The direction and routing of the fluid flow may be determined and dynamically changed by actuating the flow control assembly 114 and/or at least one flow selection valve, as shown in FIG. 1B. For example, a flow selection valve (such as solenoid valve SV1) may be disposed on a fluidic line connecting the outdoor side 102A and the indoor side 102B. The valve SV1 may be actuated to permit or block fluid communication between the outdoor side 102A and the indoor side 102B. The valve SV1, which may allow for bidirectional flow, may be controlled in coordination with other expansion devices, such as the TES expansion device EXV1, the outdoor expansion device 119, a second expansion device EXV2 associated with the indoor side, and/or the indoor expansion device (TXV).

While multiple flow selection valves are shown, it may be appreciated that other valve assemblies may also be used to selectively flow the fluid through each of indoor side components (viz., the IDU 120 and the DHW system 130), and/or between the indoor side 102B and the outdoor side 102A (or components in the outdoor side 102A).

In one or more embodiments, the compressor 112 may include a suction line and a discharge line. The suction line and the discharge line may be coupled to different indoor side or outdoor side components of the HVAC system 100. In one or more embodiments, referring to FIG. 1C, the flow control assembly 114 may be configured to selectively direct fluid flow from the discharge line and to the suction line of the compressor 112. The discharge line may be configured to carry high-pressure, high-temperature fluid from the compressor 112, while the suction line may be configured to return low-pressure fluid to the compressor 112.

In one or more embodiments, the flow control assembly 114 may include a first reversing valve 114A and a second reversing valve 114B. The first and second reversing valves 114A, 114B may include four-way valves configured to alter the path of the fluid to enable different operational modes. The configuration of the flow control assembly 114 enables the HVAC system 100 to operate in any of a plurality of operational modes, including but not limited to, a space conditioning mode, a TES conditioning mode, and a DHW TES conditioning mode.

In one or more embodiments, the first reversing valve 114A may be configured to manage fluid flow between the compressor 112 (or the suction line thereof) and the indoor-side components (such as the IDU 120 and/or the DHW system 130). For instance, the first reversing valve 114A may be configured to selectively direct high-pressure fluid from the discharge line of the compressor 112 to the indoor-side components, or to the outdoor heat exchanger 116 via the second reversing valve 114B. Additionally, the first reversing valve 114A may be configured to enable selective fluidic communication to the suction line of the compressor 112 from the indoor-side components, or from the outdoor heat exchanger 116 via the second reversing valve 114B.

For instance, the first reversing valve 114A may allow each of the IDU 120, outdoor heat exchanger 116, TES module 140, and DHW system 130 to function as either a condenser or an evaporator depending on the selected operational mode. In such instances, the first reversing valve 114A may include four ports, where three ports of the first reversing valve 114A may be fluidically coupled to the discharge line of the compressor 112, the suction line the compressor 112, and the second reversing valve 114B. The fourth port of the first reversing valve 114A may be selectively fluidically coupled to any of the IDU 120, the DHW system 130, the outdoor heat exchanger 116, or the TES module 140 depending on physical pipe connection/configuration. In the embodiment shown, the fourth port may be connected to the indoor-side components (the IDU 120 and/or the DHW system 130).

In one or more embodiments, the second reversing valve 114B may be configured to selectively enable fluidic communication between the first reversing valve 114A, the TES module 140, and the outdoor heat exchanger 116. The second reversing valve 114B may be configured to receive high-pressure fluid from the discharge line of the compressor 112 via the first reversing valve 114A, and selectively direct that fluid to either the outdoor heat exchanger 116 or the TES module 140. Furthermore, the second reversing valve 114B may be configured to direct low-pressure fluid from either the TES module 140 or the outdoor heat exchanger 116 back to the suction line of the compressor 112, either directly or via the first reversing valve 114A. In some embodiments, the second reversing valve 114B may be configured to direct the fluid to other components of the HVAC system 100 in coordination with the first reversing valve 114A. For instance, the second reversing valve 114B may include four ports. Two ports may be connected to the first reversing valve 114A and the suction line of the compressor 112, while two other ports may be selectively connected or coupled to the TES module 140, the DHW system 130, the IDU 120, and/or the outdoor heat exchanger 116, based on the position or the configuration of the first reversing valve 114A.

For example, during a space heating operational mode, the first reversing valve 114A may direct high-pressure, high-temperature fluid from the discharge line of the compressor 112 to the indoor-side components (such as the IDU 120 or the DHW system 130). Further, the fluid may return to the outdoor side 102A and be directed by the second reversing valve 114B from the outdoor heat exchanger 116 (which may function as an evaporator to absorb ambient heat) to the suction line of the compressor 112.

In a space cooling operational mode, the first reversing valve 114A may be configured to direct the high-pressure fluid from the discharge line of the compressor 112 towards the second reversing valve 114B. The second reversing valve 114B may then route the fluid to the outdoor heat exchanger 116, which functions as a condenser. After rejecting heat, the fluid flows to the indoor-side components (such as the IDU 120), where the fluid absorbs heat and provides cooling. The low-pressure fluid then returns from the indoor side components (from the IDU 120 or the DHW 130) to the first reversing valve 114A, which directs the fluid to the suction line of the compressor 112. The selective actuation of the first reversing valve 114A provides the capability to switch the HVAC system 100 between space heating and space cooling operational modes.

In one or more embodiments, the second reversing valve 114B may be configured to enable TES charging and/or discharging operational modes. In one or more embodiments, the second reversing valve 114B may allow the HVAC 100 to switch to different operating modes in combination with the space conditioning operational modes of the HVAC system 100. For instance, in a TES heat charging mode, the second reversing valve 114B may be positioned to direct hot, high-pressure fluid from the compressor 112 (via the first reversing valve 114A) into the TES module 140, causing the TES 142 to store thermal energy. Conversely, during a heat discharge mode or a cool charging mode, the second reversing valve 114B may direct fluid from the TES module 140 (where the TES 142 acts as a heat source) to the suction line of the compressor 112, thereby discharging stored thermal energy into the fluid.

In one or more embodiments, different combinations of the positions of the first reversing valve 114A and the second reversing valve 114B within the flow control assembly 114 allow the HVAC system 100 to operate in at least some of the possible operational modes of the HVAC 100.

In one or more embodiments, the flow selection valves (such as SV2, SV3, SV4, SV5, and/or EXV2) disposed on the indoor side 102B may be configured to enable additional operational modes, including dedicated charging and discharging of the DHW TES 132. The actuation of the flow selection valves allows for routing of the fluid to or around the DHW system 130 and the IDU 120, which allows the HVAC 100 to selectively switch to operational modes where energy can be stored or removed from the DHW TES 132, such as for heating water or other fluids.

For instance, during a DHW TES charging mode, which may operate in combination with a space heating mode, the flow control assembly 114 may direct hot, high-pressure fluid from the compressor 112 to the indoor side 102B. Within the indoor side, flow selection valves (such as SV2 and SV3) may be opened to route this hot fluid through the DHW TES 132. As the fluid circulates through the DHW TES 132, the fluid transfers thermal energy to the storage medium, thereby charging the DHW TES 132. After exiting the DHW system 130, the fluid may be directed to the IDU 120 to provide space heating, or returned to the outdoor side 102A. Alternatively, after exiting the DHW system 130, the fluid may be directed through the bypass assembly of the IDU 120, such that the fluid returns to the outdoor side components without flowing through the indoor heat exchanger 126.

In another example, for discharging the DHW TES 132, the DHW system 130 may utilize a separate utility fluid loop (such as a water loop) that is thermally coupled to the DHW TES 132. To provide hot water, a utility fluid may be circulated through the DHW TES 132, where the utility fluid absorbs the stored thermal energy. The resulting heated utility fluid may then be supplied to a utility (such as utility 134). The discharge process may occur independently of the main fluid cycle, allowing the HVAC system 100 to supply domestic hot water using stored energy even when the primary space conditioning functions are inactive, or when power demands (and correspondingly costs) are at a peak.

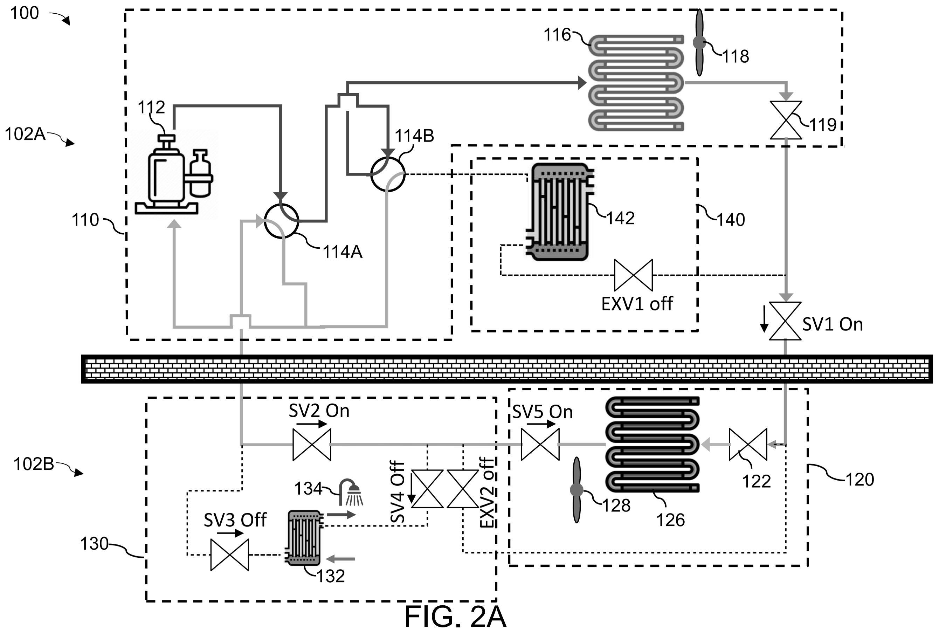

Referring to FIG. 2A, a schematic diagram of the HVAC system 100 operating in a space cooling mode, where the indoor environment 102B may be cooled by absorbing heat from the indoor space and rejecting the heat to the outdoor environment 102A. To establish the required fluid circuit for the space cooling mode, various valves may be set to specific states. In the outdoor environment 102A, the TES expansion device EXV1 may be in a closed/off position (thereby fluidically isolating the TES module 140 from the ODU 110), and the solenoid valve SV1 may be in an open position. In the indoor environment 102B, solenoid valves SV2 and SV5 may be in an open/on position to allow fluid, while solenoid valves SV3, SV4 to flow through the bypass assembly of the DHW system 130. Further, the expansion valve EXV2 may be in a closed/off position, to direct the fluid through the IDU 120 (or the indoor heat exchanger 126). Both the outdoor fan 118 and the indoor fan 128 may be actuated to facilitate heat exchange.

In the space cooling operational mode, the compressor 112 may compress a fluid, such as a refrigerant, into a high-pressure, high-temperature vapor. The first reversing valve 114A of the flow control assembly 114 may be positioned to direct the hot vapor fluid to the second reversing valve 114B. The second reversing valve 114B may, in turn, route the fluid to the outdoor heat exchanger 116. With the outdoor fan 118 active, the outdoor heat exchanger 116 functions as a condenser, rejecting heat from the fluid to the ambient air in the outdoor environment 102A, causing the fluid to condense into a high-pressure liquid fluid.

In one or more embodiments, the high-pressure liquid fluid exits the outdoor heat exchanger 116 and flows through the outdoor expansion device 119. The fluid is then flowed through the open solenoid valve SV1 , to the indoor side 102B. Upon entering the indoor side 102B, the fluid flows to the indoor expansion device 122 (such as a TXV). The indoor expansion device 122 may expand the high-pressure liquid fluid (either in combination or in alternative to the outdoor expansion device 119).

In one or more embodiments, the cold, two-phase (mixture) fluid enters the indoor heat exchanger 126. With the indoor fan 128 circulating air from the indoor environment 102B across the coils of the indoor heat exchanger 126, the indoor heat exchanger 126 functions as an evaporator. The fluid absorbs heat from the indoor air, which provides a cooling effect to the space. The absorption of heat causes the liquid portion of the fluid to evaporate, resulting in a low-pressure, low-temperature vapor.

In one or more embodiments, the low-pressure vapor fluid exits the indoor heat exchanger 126 and flows through the open solenoid valve SV5. Since SV3, SV4, and EXV2 are closed, the fluid bypasses the DHW system 130 and continues through the open solenoid valve SV2. From valve SV2, the low-pressure vapor fluid returns to the outdoor side 102A and enters the first reversing valve 114A. The first reversing valve 114A directs the vapor fluid to the suction line of the compressor 112.

In one or more embodiments, the HVAC system 100 may be operated in the space cooling mode when there is a demand for cooling in the indoor environment 102B. The HVAC 100 may be operated in the space cooling operational mode during valley or off-peak electricity periods when the cost of running the compressor 112 is below a first threshold. The space cooling mode may also be used when the TES module 140 and the DHW TES 132 are in a state that does not require further energy charging or discharging, such as when the TES 142 or the DHW TES 132 are fully charged. Alternatively, the HVAC system 100 may be operated in the space cooling operational mode when the cost of power on the power grid is below a first threshold, and above a second threshold, or when the cost of power is expected to fall below the second threshold in the future. The second threshold may be less than the first threshold.

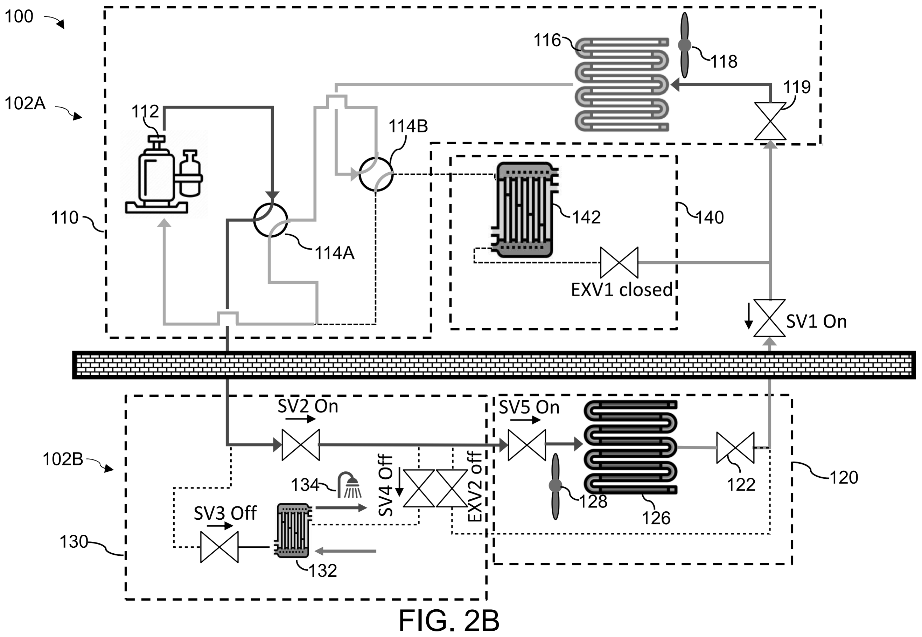

Referring to FIG. 2B, a schematic diagram of the HVAC system 100 operating in a space heating mode is shown. In one or more embodiments, the space heating mode may be configured to provide heating to the indoor environment 102B by absorbing heat from the outdoor environment 102A and rejecting the heat into the indoor space. To establish the required fluid circuit for the space heating mode, various valves may be set to specific states. In the outdoor environment 102A, the TES expansion device EXV1 may be in a closed position, which fluidically isolates the TES module 140. Solenoid valve SV1 may be in an open position to allow fluid communication between the outdoor side 102A and the indoor side 102B. In the indoor environment 102B, solenoid valves SV2 and SV5 may be in an open/on position. Solenoid valves SV3 and SV4 may be in a closed/off position to bypass the DHW TES 132. Further, expansion valve EXV2 may be in a closed/off position to direct the fluid through the indoor heat exchanger 126. Both the outdoor fan 118 and the indoor fan 128 may be actuated to facilitate heat exchange.

In one or more embodiments, the space heating operational mode may be initiated when the compressor 112 compresses a fluid, such as a refrigerant, into a high-pressure, high-temperature vapor. The first reversing valve 114A of the flow control assembly 114 may be positioned to direct the hot vapor fluid to the indoor side 102B. The hot vapor fluid flows through the open solenoid valve SV2 and the open solenoid valve SV5 to enter the indoor heat exchanger 126.

In one or more embodiments, with the indoor fan 128 active, the indoor heat exchanger 126 may function as a condenser. As the high-pressure vapor flows through the indoor heat exchanger 126, the fluid rejects heat to the air in the indoor environment 102B, thereby providing a heating effect. The rejection of heat causes the fluid to condense into a high-pressure liquid. The liquid fluid then exits the indoor heat exchanger 126 and passes through the indoor expansion device 122.

In one or more embodiments, the high-pressure liquid fluid flows from the indoor side 102B back to the outdoor side 102A through the open solenoid valve SV1. The fluid then passes through the outdoor expansion device 119, where the fluid expands into a low-pressure, low-temperature two-phase mixture. The cold expanded fluid enters the outdoor heat exchanger 116, which functions as an evaporator. With the outdoor fan 118 circulating ambient air, the fluid absorbs heat from the outdoor environment 102A, causing the fluid to evaporate into a low-pressure vapor.

In one or more embodiments, the low-pressure vapor fluid exits the outdoor heat exchanger 116 and is directed to the second reversing valve 114B. The second reversing valve 114B routes the vapor fluid to the first reversing valve 114A, which in turn directs the fluid to the suction line of the compressor 112, thereby completing the cycle.

In one or more embodiments, the HVAC system 100 may be operated in the space heating mode when there is a demand for heating in the indoor environment 102B. The space heating operational mode may be utilized during valley or off-peak electricity periods when the cost of operating the compressor 112 is below a defined (such as first or second) threshold. The space heating mode may also be used when the TES module 140 and the DHW TES 132 do not require further energy charging or discharging to meet system demands.

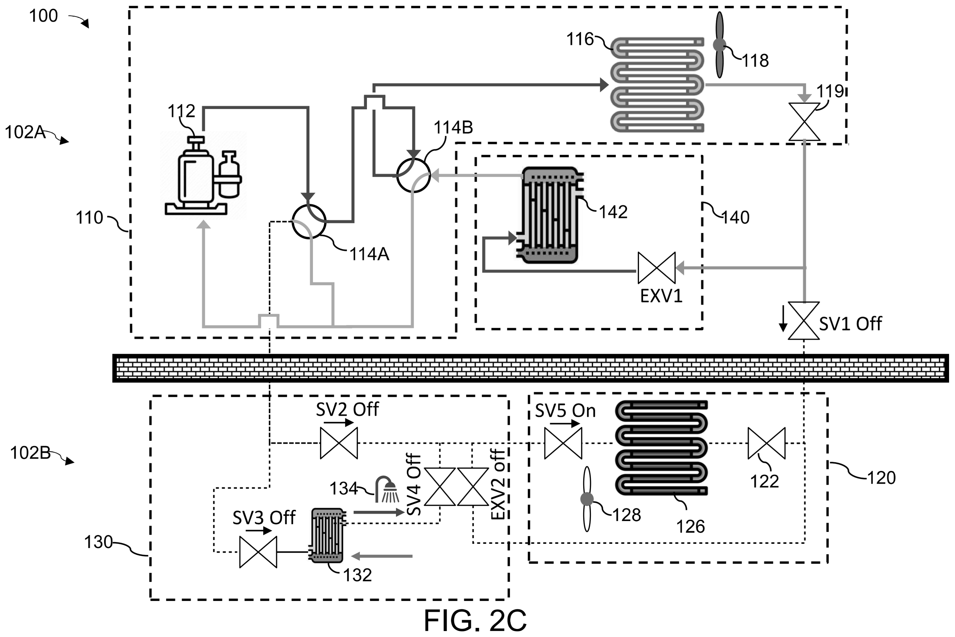

Referring to FIG. 2C, a schematic diagram of the HVAC system 100 operating in a cool energy storage mode is shown. In one or more embodiments, the cool energy storage operational mode may be configured to charge the TES module 140 with cool thermal energy (i.e., remove heat from the TES 142) without providing conditioning to the indoor environment 102B. Cool energy storage may essentially allow the TES 142 to operate as a heat sink for later applications. For the cool energy storage mode, the solenoid valve SV1 may be in a closed/off position to fluidically isolate the indoor side 102B from the outdoor side 102A. The TES expansion device EXV1 may be in an open or active state. On the indoor side 102B, the flow selection control valves (including SV2, SV3, SV4, SV5, and EXV2) may be in a closed/off position. The outdoor fan 118 may be actuated, while the indoor fan 128 may be deactivated.

In one or more embodiments, the cool energy storage cycle may be initiated by the compressor 112 compressing a fluid to a high-pressure, high-temperature vapor. The flow control assembly 114 may be configured to direct the hot vapor fluid from the discharge line of the compressor 112, through the first reversing valve 114A and the second reversing valve 114B, to the outdoor heat exchanger 116.

In one or more embodiments, with the outdoor fan 118 operating, the outdoor heat exchanger 116 may function as a condenser. The fluid rejects heat to the ambient air of the outdoor environment 102A, causing the fluid to condense into a high-pressure liquid fluid. The high-pressure liquid fluid then flows through the outdoor expansion device 119.

In one or more embodiments, since solenoid valve SV1 is closed, the high-pressure liquid fluid may be directed to the TES expansion device EXV1. The TES expansion device EXV1 expands the fluid, causing a drop in pressure and temperature, which results in a low-pressure, low-temperature two-phase mixture. The cold fluid then enters the TES module 140.

In one or more embodiments, the TES 142 may function as an evaporator. As the cold, two-phase fluid flows through the TES 142, the fluid absorbs thermal energy from the storage medium within the TES 142. The absorption of heat lowers the temperature of the storage medium, thereby charging the TES module 140 with cool energy. The fluid may evaporate into a low-pressure vapor fluid.

In one or more embodiments, the low-pressure vapor fluid exits the TES module 140 and is routed by the second reversing valve 114B to the first reversing valve 114A. The first reversing valve 114A directs the vapor back to the suction line of the compressor 112 to repeat the cycle.

In one or more embodiments, the HVAC system 100 may be operated in the cool energy storage mode during periods of low energy demand or cost, such as during valley electricity rate periods, such as when the cost of power is less than the second threshold. The cool energy storage operational mode allows the HVAC system 100 to store cooling capacity in the TES module 140 for later use, enabling energy load shifting and reducing electricity consumption during peak demand hours. The cool energy storage operational mode may be terminated once the TES 142 is determined to be fully charged with cool energy (or when latent and/or sensible heat in the TES 142 has been drained/removed). Alternatively, the cool energy storage operational mode may be terminated when the low-cost energy period ends.

In one or more embodiments, the fluid flow depicted in FIG. 2C may also be utilized as a defrost operational mode. In some cases, frost or ice may accumulate on the surfaces of the outdoor heat exchanger 116 during operation in cold and humid conditions. In the defrost mode, the TES module 140, which may contain stored thermal energy, functions as a heat source (i.e., an evaporator). The fluid absorbs the stored heat from the TES 142 and is vaporized. The resulting vapor fluid is then compressed by the compressor 112 into a high-pressure, high-temperature fluid. The hot fluid is directed to the outdoor heat exchanger 116, where the fluid condenses and releases heat, thereby melting the accumulated frost. The defrost operational mode allows the HVAC system 100 to use stored thermal energy for defrosting different portions of the ODU 110 (such as the outdoor heat exchanger 116), which may improve the efficiency and heating comfort of HVAC system 100.

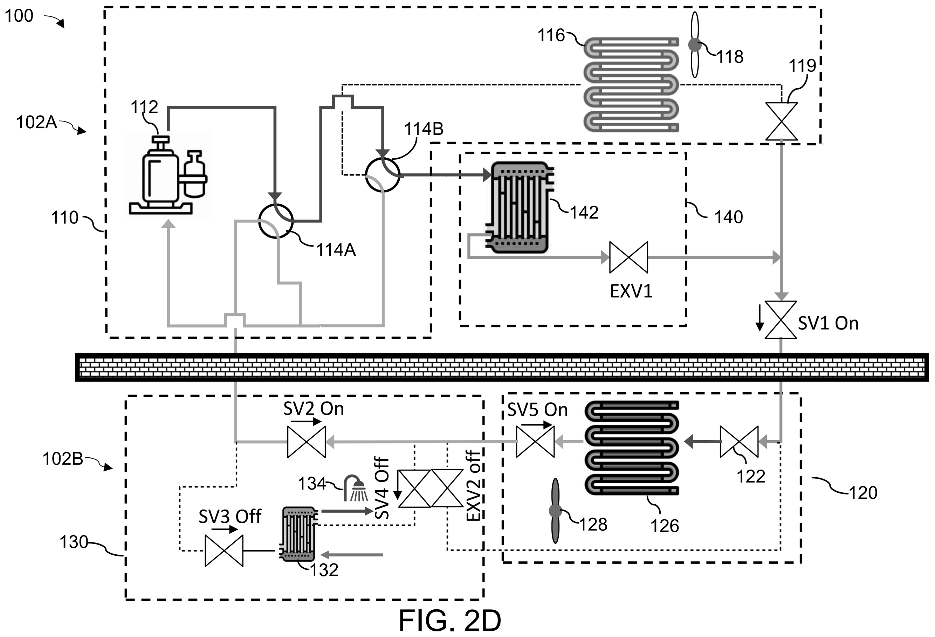

Referring to FIG. 2D, a schematic diagram of the HVAC system 100 operating in a cool energy discharge mode is shown. In one or more embodiments, the cool energy discharge operational mode may be configured to provide cooling to the indoor environment 102B by utilizing the cool thermal energy stored in the TES module 140. In the cool energy discharge operational mode, various valves may be set to specific states. In the outdoor environment 102A, the outdoor expansion device 119 may be in a closed/off position, the TES expansion device EXV1 and solenoid valve SV1 may be in an open/on position. In the indoor environment 102B, solenoid valves SV2 and SV5 may be in an open/on position, while solenoid valves SV3, SV4, and expansion valve EXV2 may be in a closed/off position to bypass the DHW system 130. The indoor fan 128 may be active, while the outdoor fan 118 may be deactivated.

In one or more embodiments, the cool energy discharge cycle may be initiated by the compressor 112, which circulates a fluid by compressing the fluid to a high-pressure, high-temperature vapor. The flow control assembly 114 may be configured such that the first reversing valve 114A directs the hot vapor to the second reversing valve 114B. The second reversing valve 114B then routes the fluid into the TES module 140.

In one or more embodiments, the TES 142, having been charged with cool energy, may function as a condenser. As the hot vapor fluid passes through the TES 142, the fluid rejects heat to the TES 142. The rejection of heat (and absorption by the TES 140) causes the fluid to condense into a high-pressure, cool liquid, thereby "discharging" the stored cool energy from the TES 142 into the fluid.

In one or more embodiments, the cool, high-pressure liquid fluid exits the TES module 140 and flows through the open TES expansion device EXV1 and the open solenoid valve SV1 to the indoor side 102B. The outdoor expansion device 119 may be closed, to prevent the fluid from flowing into the outdoor heat exchanger 116. The fluid then enters the indoor expansion device 122 (such as a TXV), which expands the fluid into a low-pressure, low-temperature two-phase mixture.

In one or more embodiments, the cold, two-phase fluid flows into the indoor heat exchanger 126. With the indoor fan 128 operating, the indoor heat exchanger 126 functions as an evaporator, absorbing heat from the indoor air and providing a cooling effect to the indoor environment 102B. The absorption of heat causes the fluid to evaporate into a low-pressure vapor.

In one or more embodiments, the low-pressure vapor fluid exits the indoor heat exchanger 126 and flows through the open solenoid valve SV5 and the open solenoid valve SV2, bypassing the DHW system 130. The fluid then returns to the outdoor side 102A, where the first reversing valve 114A directs the fluid to the suction line of the compressor 112.

In one or more embodiments, the HVAC system 100 may be operated in the cool energy discharge mode during periods of high energy demand or cost, such as during peak electricity rate periods, when the cost of power is above the first threshold (or a third threshold above the first threshold), and/or when sufficient thermal energy is stored (above a thermal energy storage threshold). By utilizing the stored cool energy, the HVAC system 100 can provide space cooling while the outdoor fan 118 is inactive, which may reduce overall electricity consumption from the grid. The cool energy discharge operational mode may be terminated when the cooling demand is met, the cool energy in the TES 142 is depleted, or the high-cost energy period ends (or when the cost reduces to a value below the first threshold).

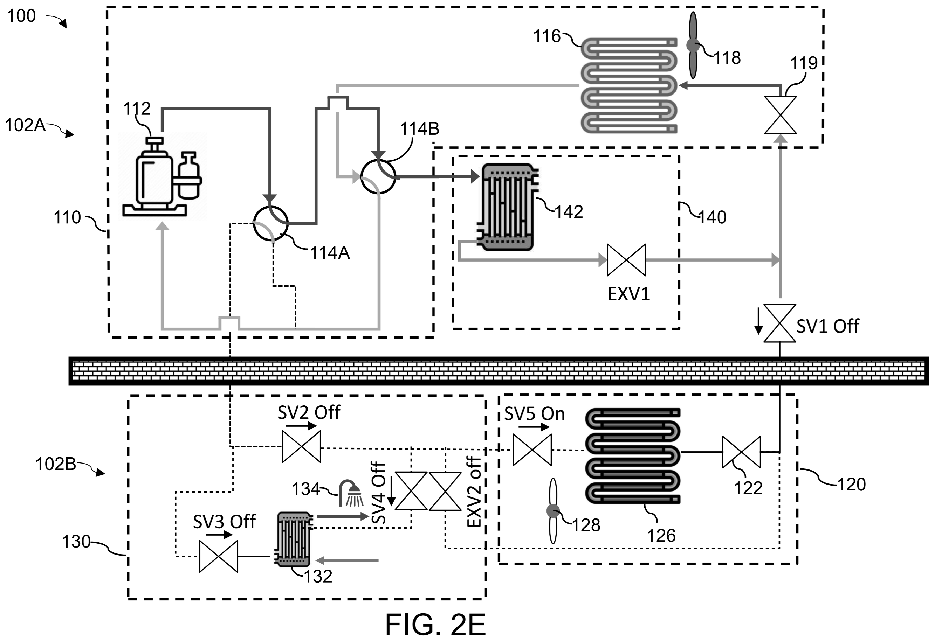

Referring to FIG. 2E, a schematic diagram of the HVAC system 100 operating in a heat energy storage mode is shown. In one or more embodiments, the HVAC system 100 may be operated in the heat energy storage operational mode, also referred to as a heat charging mode, to store thermal energy in the TES module 140 without providing conditioning to the indoor environment 102B. In the heat energy storage mode, solenoid valve SV1 may be in a closed/off position, which fluidically isolates the indoor side 102B from the outdoor side 102A. On the indoor side 102B, all flow selection valves (including SV2, SV3, SV4, SV5, and EXV2) may be in a closed/off position. The TES expansion device EXV1 may be in an open or active state. The outdoor fan 118 may be actuated, while the indoor fan 128 may be deactivated.

In one or more embodiments, the heat energy storage cycle may be initiated by the compressor 112 compressing a fluid to a high-pressure, high-temperature vapor. The flow control assembly 114 may be configured to direct the hot vapor fluid from the discharge line of the compressor 112, through the first reversing valve 114A and subsequently through the second reversing valve 114B, to the TES module 140.

In one or more embodiments, the TES 142 may function as a condenser. As the hot, high-pressure vapor fluid flows through the TES 142, the fluid rejects heat to the TES 142. The transfer of thermal energy charges the TES module 140 with heat. The rejection of heat causes the fluid to condense into a high-pressure liquid.

In one or more embodiments, the high-pressure liquid fluid exits the TES module 140 and flows through the open TES expansion device EXV1. The fluid then passes through the outdoor expansion device 119. The expansion devices (EXV1 and/or 119) may be configured to expand the fluid, causing a drop in pressure and temperature and transforming the fluid into a low-pressure, low-temperature two-phase mixture.

In one or more embodiments, the cold, two-phase fluid enters the outdoor heat exchanger 116. With the outdoor fan 118 operating, the outdoor heat exchanger 116 functions as an evaporator. The fluid absorbs heat from the ambient air in the outdoor environment 102A, causing the fluid to evaporate completely into a low-pressure vapor.

In one or more embodiments, the resulting low-pressure vapor fluid exits the outdoor heat exchanger 116 and is directed to the second reversing valve 114B. The second reversing valve 114B routes the vapor fluid to the first reversing valve 114A, which in turn directs the fluid to the suction line of the compressor 112 to complete the cycle.

In one or more embodiments, the HVAC system 100 may be operated in the heat energy storage mode during periods of low energy demand or cost, such as during valley electricity rate periods when the cost of power is below the second threshold. The heat energy storage operational mode allows the HVAC system 100 to store thermal energy for later use in applications such as space heating or DHW heating, thereby enabling energy load shifting and reducing electricity consumption during peak demand hours. The heat energy storage mode may be terminated once the TES 142 is determined to be fully charged with heat or when the low-cost energy period ends.

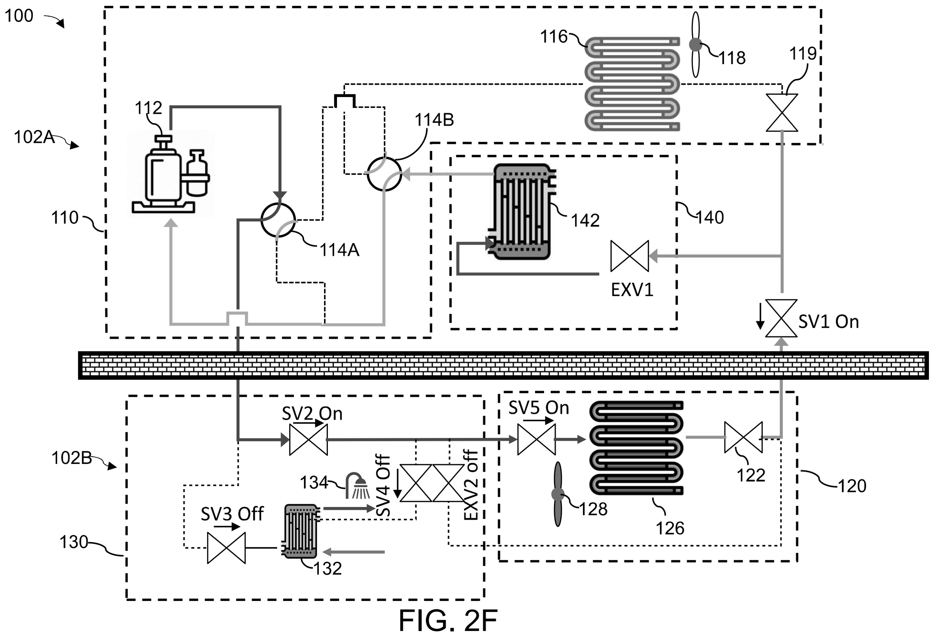

Referring to FIG. 2F, a schematic diagram of the system 100 operating in a heat energy discharge mode is shown. In one or more embodiments, in the heat energy discharge mode, the system 100 may be configured to provide heating to the indoor environment 102B by utilizing thermal energy stored in the TES module 140. In heat energy discharge mode, solenoid valve SV1, solenoid valve SV2, and solenoid valve SV5 may be in an open/on position. Solenoid valve SV3, solenoid valve SV4, and expansion valve EXV2 may be in a closed/off position to bypass the DHW system 130. The TES expansion device EXV1 may be in an open or active state. The indoor fan 128 may be actuated, while the outdoor fan 118 may be deactivated.

In one or more embodiments, the heat energy discharge cycle may be initiated by the compressor 112 compressing a fluid to a high-pressure, high-temperature vapor. The first reversing valve 114A of the flow control assembly 114 may be configured to direct the hot vapor fluid to the indoor side 102B. The fluid flows through the open valves SV2 and SV5 to enter the indoor heat exchanger 126.

In one or more embodiments, with the indoor fan 128 operating, the indoor heat exchanger 126 may function as a condenser. As the hot vapor fluid flows through the indoor heat exchanger 126, the fluid rejects heat to the indoor air, providing a heating effect to the indoor environment 102B. The rejection of heat causes the fluid to condense into a high-pressure liquid.

In one or more embodiments, the high-pressure liquid fluid exits the indoor heat exchanger 126 and passes through the indoor expansion device 122. The fluid then returns to the outdoor side 102A via the open solenoid valve SV1 and flows to the TES expansion device EXV1. Alternatively, or additionally, the TES expansion device EXV1 expands the fluid, causing a drop in its pressure and temperature and transforming the fluid into a low-pressure, low-temperature two-phase mixture.

In one or more embodiments, the cold, two-phase fluid enters the TES module 140. The TES 142 may include the stored thermal energy, and may function as an evaporator. The fluid absorbs heat/thermal energy from the TES 142, causing the fluid to evaporate completely into a low-pressure vapor, thereby discharging the stored thermal energy from the TES module 140 into the fluid.

In one or more embodiments, the resulting low-pressure vapor fluid exits the TES module 140 and is directed by the second reversing valve 114B to the first reversing valve 114A. The first reversing valve 114A then routes the vapor fluid to the suction line of the compressor 112.

In one or more embodiments, the HVAC system 100 may be operated in the heat energy discharge mode during periods of high energy demand or cost, such as when the cost of power is above the first/second threshold. The heat energy discharge operational mode may also be used when the outdoor ambient temperature is too low (or below a temperature threshold) for the outdoor heat exchanger 116 to function efficiently as a heat source. By using the stored thermal energy from the TES 142, the system 100 can provide space heating while reducing electricity consumption from the grid and avoiding the need for frequent defrost cycles of the outdoor heat exchanger 116. The heat energy discharge mode may be terminated when the heating demand is met, the stored thermal energy in the TES 142 is depleted, or the high-cost energy period ends.

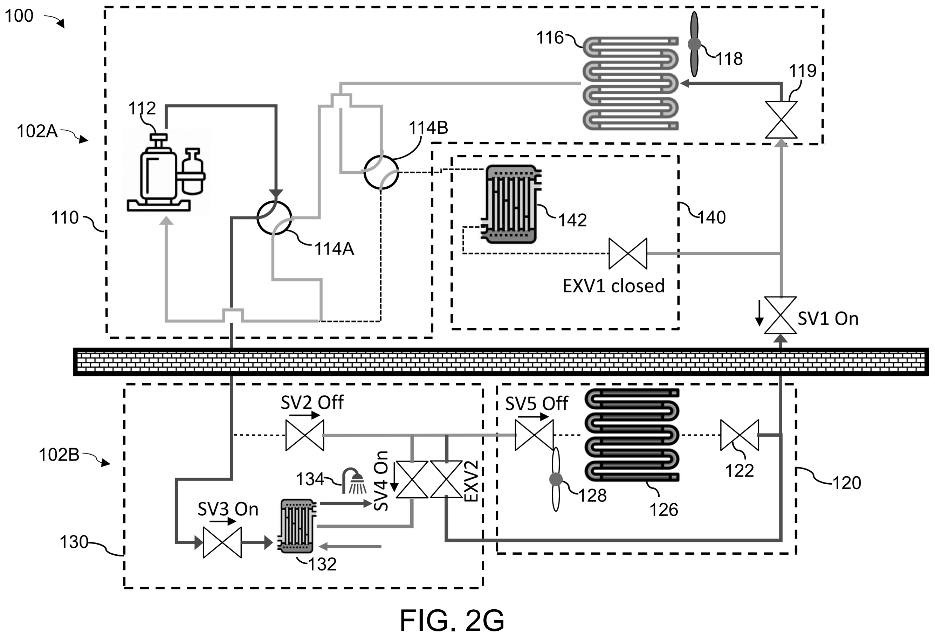

Referring to FIG. 2G, a schematic diagram of the HVAC system 100 operating in a DHW TES charge mode is shown. In the DHW TES charge mode, the HVAC system 100 may be configured to store heat in the DHW TES 132 without providing conditioning to the indoor heat exchanger 126 or the TES module 140. In the outdoor environment 102A, the TES expansion device EXV1 may be in a closed position to fluidically isolate the TES module 140, and solenoid valve SV1 may be in an open/on position. In the indoor environment 102B, solenoid valve SV3 and solenoid valve SV4 may be in an open/on position to direct fluid through the DHW system 130 (or the DHW TES 132). Solenoid valves SV2 and SV5 may be in a closed/off position to bypass the indoor heat exchanger 126. Expansion valve EXV2 may be in an open or active state, also to flow through the bypass assembly of the IDU 120, i.e., through the diversion line between the expansion device EXV2 and the solenoid valve SV1. The outdoor fan 118 may be actuated, while the indoor fan 128 may be deactivated.

In one or more embodiments, the DHW TES charge mode may be initiated by the compressor 112 compressing a fluid to a high-pressure, high-temperature vapor. The first reversing valve 114A of the flow control assembly 114 may be positioned to direct the hot vapor fluid from the discharge line to the indoor side 102B. The fluid flows through the open solenoid valve SV3 and enters the DHW TES 132.

In one or more embodiments, the DHW TES 132 may function as a condenser. As the high-pressure vapor fluid flows through the DHW TES 132, the fluid rejects heat to the storage medium of the DHW TES 132, thereby charging the DHW TES 132 with heat. The rejection of heat causes the fluid to condense into a high-pressure liquid.

In one or more embodiments, the high-pressure liquid fluid exits the DHW TES 132 and flows through the open solenoid valve SV4 and the expansion valve EXV2. The fluid then returns to the outdoor side 102A from the indoor side 102B via the bypass assembly of the IDU 120 and open solenoid valve SV1. The fluid passes through the outdoor expansion device 119, where the fluid may be expanded into a low-pressure, low-temperature two-phase mixture.

In one or more embodiments, the cold, two-phase fluid enters the outdoor heat exchanger 116. With the outdoor fan 118 operating, the outdoor heat exchanger 116 functions as an evaporator, absorbing heat from the ambient air and causing the fluid to evaporate into a low-pressure vapor. The resulting low-pressure vapor fluid exits the outdoor heat exchanger 116 and is directed through the second reversing valve 114B and the first reversing valve 114A to the suction line of the compressor 112, which completes the cycle.

In one or more embodiments, the HVAC system 100 may be operated in the DHW TES charge mode during periods of low energy demand or cost, such as when the cost of power is below the second threshold. Operating in the DHW TES charge mode allows the HVAC system 100 to store heat for domestic hot water applications, for example, which may be discharged at a later time. The DHW TES charge mode may be terminated once the DHW TES 132 is determined to be fully charged with heat or when the low-cost energy period concludes.

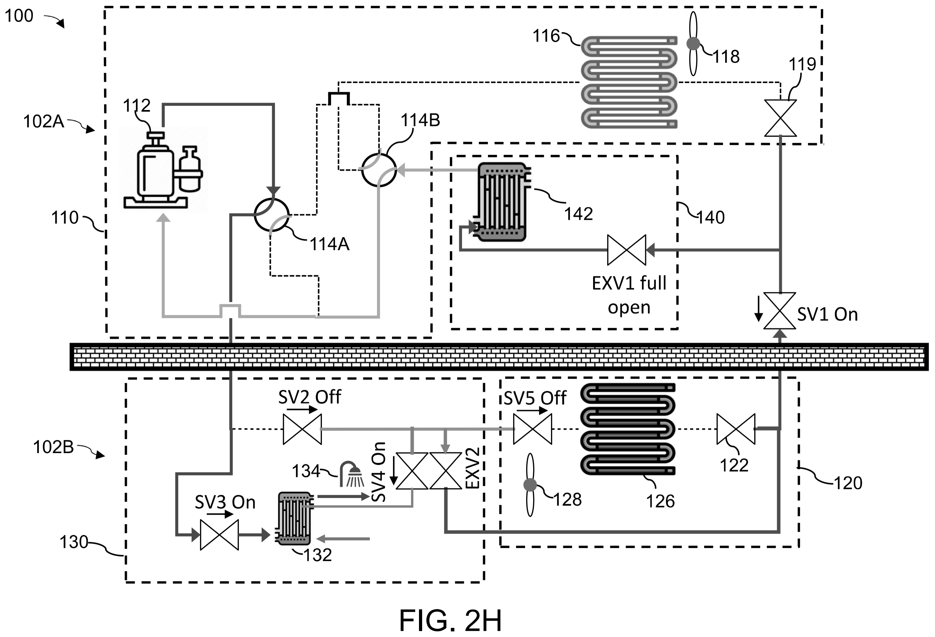

Referring to FIG. 2H, a schematic diagram of the HVAC system 100 operating in a combined DHW TES charge and cool energy storage mode is shown. In the combined DHW TES charge and cool energy storage mode, the HVAC system 100 may be configured to simultaneously store heat in the DHW TES 132 and store cool energy in the TES module 140. In the outdoor environment 102A, the TES expansion device EXV1 may be in a fully open position, and solenoid valve SV1 may be in an open/on position. In the indoor environment 102B, solenoid valves SV3 and SV4 may be in an open/on position, and expansion valve EXV2 may be active/open. Solenoid valves SV2 and SV5 may be in a closed/off position to bypass the indoor heat exchanger 126. Both the outdoor fan 118 and the indoor fan 128 may be deactivated.

In one or more embodiments, the combined DHW TES charging and cool energy charging operational mode may be initiated by the compressor 112 compressing a fluid to a high-pressure, high-temperature vapor. The first reversing valve 114A of the flow control assembly 114 may be configured to direct the hot vapor fluid from the discharge line to the indoor side 102B. The fluid flows through the open solenoid valve SV3 to enter the DHW TES 132.

In one or more embodiments, the DHW TES 132 may function as a condenser. As the high-pressure vapor fluid passes through the DHW TES 132, the fluid rejects heat to the DHW TES 132, which charges the DHW TES 132 with heat. The rejection of heat causes the fluid to condense into a high-pressure liquid.

In one or more embodiments, the high-pressure liquid fluid exits the DHW TES 132 and flows through the open solenoid valve SV4. The fluid is then expanded to a lower pressure and temperature by passing through the expansion valve EXV2 on the bypass assembly of the IDU 120, transforming the fluid into a low-pressure, two-phase mixture.

In one or more embodiments, the cold, two-phase fluid returns to the outdoor side 102A through the open solenoid valve SV1. The fluid may pass through the outdoor expansion device 119 and the fully open TES expansion device EXV1 before entering the TES module 140.

In one or more embodiments, the TES 142 may function as an evaporator. The cold fluid absorbs heat from the storage medium within the TES 142, which charges the TES module 140 with cool energy. The absorption of heat causes the fluid to evaporate into a low-pressure vapor. The resulting low-pressure vapor fluid exits the TES module 140 and is directed by the second reversing valve 114B and the first reversing valve 114A to the suction line of the compressor 112.

In one or more embodiments, the HVAC system 100 may be operated in the combined DHW TES charge and cool energy storage mode during periods of low energy demand or cost, such as when the cost of power is below the second threshold. The combined DHW TES charge and cool energy storage mode allows the HVAC system 100 to prepare for both future heating (for DHW) and/or cooling (for space conditioning) demands simultaneously, maximizing the use of off-peak energy. The combined DHW TES charge and cool energy storage mode may be terminated when either the DHW TES 132 is fully charged with heat, the TES 142 is fully charged with cool energy, or the low-cost energy period ends.

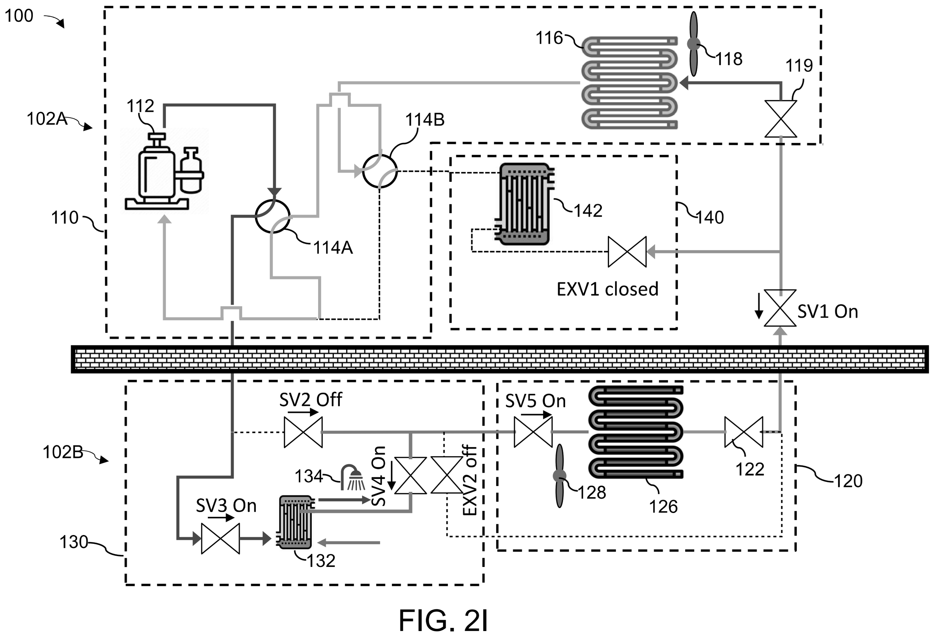

Referring to FIG. 2I, a schematic diagram of the HVAC system 100 operating in a combined space heating and DHW TES charge mode is shown. In the combined space heating and DHW TES charge mode, the HVAC system 100 may be configured to provide heating to the indoor environment 102B while simultaneously storing heat in the DHW TES 132. In the outdoor environment 102A, the TES expansion device EXV1 may be in a closed position to fluidically isolate the TES module 140, and solenoid valve SV1 may be in an open/on position. In the indoor environment 102B, solenoid valves SV3, SV4, and SV5 may be in an open/on position. Solenoid valve SV2 and expansion valve EXV2 may be in a closed/off position. Both the outdoor fan 118 and the indoor fan 128 may be actuated.

In one or more embodiments, the combined space heating and DHW TES charge operational mode may be initiated by the compressor 112 compressing a fluid to a high-pressure, high-temperature vapor. The first reversing valve 114A of the flow control assembly 114 may be configured to direct the hot vapor fluid from the discharge line to the indoor side 102B.

In one or more embodiments, upon entering the indoor side 102B, the fluid flows through the open solenoid valve SV3 into the DHW TES 132. The DHW TES 132 may function as a condenser, where the fluid rejects heat to the DHW TES 132, thereby charging the DHW TES 132 with heat. The fluid condenses into a high-pressure liquid and exits through the open solenoid valve SV4. The fluid exiting the DHW TES 132 may be provided to the IDU 120, towards the indoor heat exchanger 126. The fluid flow through the open solenoid valve SV5 and entering the indoor heat exchanger 126.

In one or more embodiments, with the indoor fan 128 operating, the indoor heat exchanger 126 also functions as a condenser. The fluid entering the indoor heat exchanger 126 rejects heat to the indoor air, providing a heating effect to the space. Any remaining vapor in the fluid condenses, and the fluid exits the indoor heat exchanger 126 as a high-pressure liquid.

In one or more embodiments, the high-pressure liquid fluid passes through the indoor expansion device 122 and returns to the outdoor side 102A via the open solenoid valve SV1. The fluid is then expanded by the outdoor expansion device 119 into a low-pressure, low-temperature two-phase mixture. The cold fluid enters the outdoor heat exchanger 116, which functions as an evaporator. With the outdoor fan 118 active, the fluid absorbs heat from the ambient air and evaporates into a low-pressure vapor.

In one or more embodiments, the low-pressure vapor fluid exits the outdoor heat exchanger 116 and is routed by the second reversing valve 114B and the first reversing valve 114A to the suction line of the compressor 112, completing the cycle.

In one or more embodiments, the HVAC system 100 may be operated in the combined space heating and DHW TES charge mode when there is a simultaneous demand for space heating and a need to charge the DHW TES 132. The combined space heating and the DHW TES charge modes may also be implemented during off-peak periods (such as when the cost of power/electricity is below the second threshold) to meet immediate heating needs while also storing heat for future domestic hot water use.

In one or more embodiments, the configurations/arrangements of the flow selection valves described herein, which are otherwise constructed/arranged using a solenoid assembly, may be implemented using alternative components while achieving similar flow control functionalities. For instance, the TES expansion device EXV1 and the solenoid valve SV1 (among other flow selection valves), which collectively manage fluid flow between the outdoor side components (viz. the TES module 140, and the ODU 110) and the indoor side 102B (viz., the IDU 120 and/or the DHW system 130), may be replaced by a single three-way valve. In such an embodiment, the three-way valve may be disposed at the fluidic junction connecting these three paths. The three-way valve could be actuated to a first position to fluidically couple the indoor side 102B with the ODU 110 (bypassing the TES module 140), a second position to fluidically couple the TES module 140 with the ODU 110 (isolating the indoor side 102B), and a third position to fluidically couple the TES module 140 to the indoor side components.

Similarly, valve assemblies on the indoor side 102B may also be consolidated. For example, the solenoid valves SV2 and SV3, which are configured to selectively direct fluid either into the DHW TES 132 (via SV3) or around the DHW TES 132 (via SV2), may be replaced by a single three-way valve. The three-way valve may be positioned at the inlet junction and may be actuated to route the incoming fluid to either the DHW TES 132 or the bypass assembly of the DHW system 130. Similarly, the solenoid valve SV5 and the expansion valve EXV2, which collectively control whether fluid flows through the indoor heat exchanger 126 or bypasses the indoor heat exchanger 126, may be replaced by another three-way valve. The three-way valve may be configured to receive fluid from the DHW system 130 (or its bypass assembly) and selectively direct the fluid either to the inlet of the indoor heat exchanger 126 or directly to the return line leading to the outdoor side 102A.

In other embodiments, the flow control assembly 114, which is shown including the first reversing valve 114A and the second reversing valve 114B, may be replaced by a single, more complex multi-port valve. For example, a six-port or eight-port rotary valve or a custom integrated valve block could be used. Such a multi-port valve may include dedicated ports fluidically coupled to the compressor discharge line, the compressor suction line, the outdoor heat exchanger 116, the TES module 140, and the supply/return lines to the indoor side 102B. In one or more embodiments, a controller may actuate the multi-port valve to discrete positions, where each position internally connects the ports to create a corresponding fluid circuit/fluidic connection required for a desired operational mode, such as space cooling, heat energy storage, or a combined mode. Such alternatives may reduce the overall piping complexity and footprint of the flow control assembly 114 within the ODU 110.

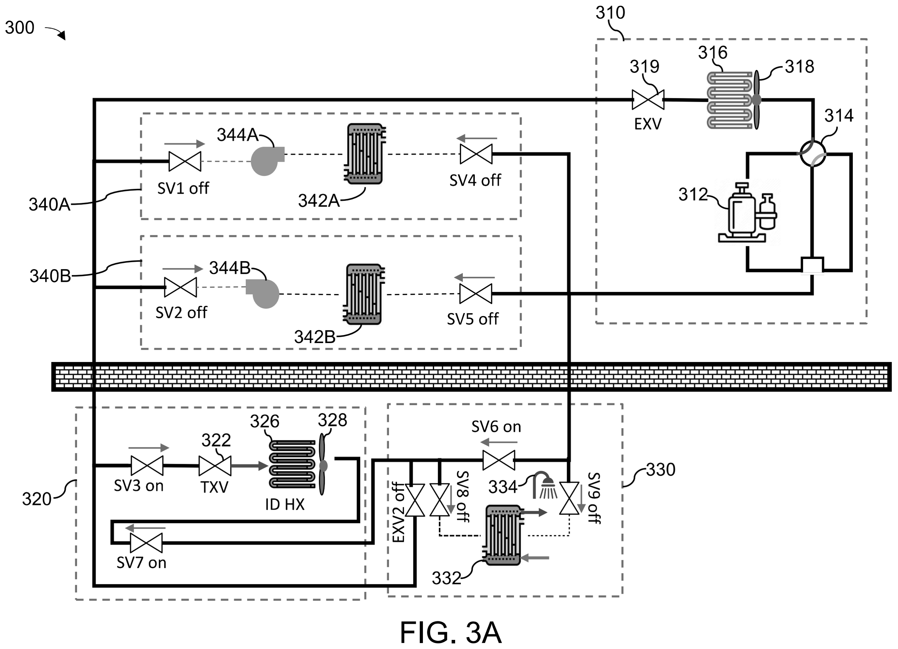

In one or more embodiments, alternative configurations for the thermal energy storage aspects of the HVAC system are also envisioned, such as where the TES module includes multiple TES units for cooling and heating loads. In some embodiments, the flow control assembly may be provided at the TES module, thereby allowing the flow control assembly to be retrofitted into existing HVAC designs having any or a combination of the IDU, the ODU, and the DHW. Such embodiments are described in detail in reference to FIGs. 3A to 6J.

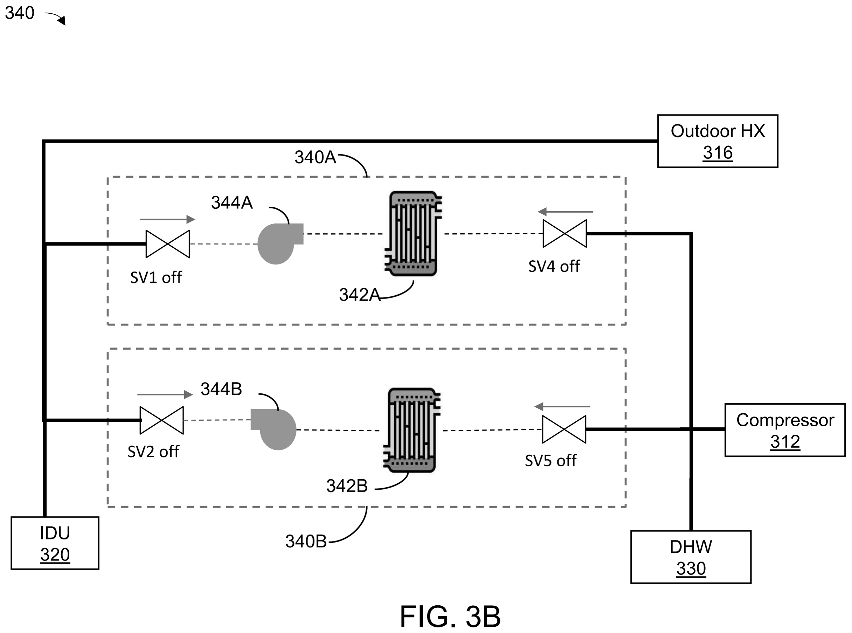

Referring to FIGs. 3A and 3B, another embodiment of an HVAC system 300 is shown. In one or more embodiments, the HVAC system 300 may include an ODU 310, an IDU 320, and a DHW system 330. The ODU 310 may include a compressor 312 (and/or a refrigeration pump), a reversing valve 314, an outdoor heat exchanger 316, an outdoor fan 318, and an outdoor expansion device 319. The IDU 320 may include an indoor expansion device 322, an indoor heat exchanger 326, and an indoor fan 328. The DHW system 330, which may be fluidically coupled to the IDU 320, may include a DHW TES 332 and a utility 334. To manage fluid flow within the indoor side, the HVAC system 300 may include a plurality of flow selection valves (such as SV3, SV6, SV7, SV8, SV9, and expansion valve EXV2). The flow selection valves may operate similarly to those of the HVAC system 100, providing the capability to selectively direct fluid through or bypass the indoor heat exchanger 326 and/or the DHW TES 332 based on the selected operational mode. Further, the components of the HVAC system 300 may be implemented similarly to the corresponding components of the HVAC system 100 described previously.

In one or more embodiments, the HVAC system 300 may include a TES module 340. The TES module 340 may be in selective fluidic communication with the IDU 320, the ODU 310, and/or the DHW 330. In one or more embodiments, the TES module 340 may include one or more sub-assemblies, such as a heating load assembly 340A and a cooling load assembly 340B. The heating load assembly 340A may include a heating load TES 342A, and the cooling load assembly 340B may include a cooling load TES 342B. The heating load assembly 340A and the cooling load assembly 340B may be arranged in parallel and may be in selective fluidic communication with at least one of the DHW system 330, the IDU 320, or the ODU 310.

In one or more embodiments, the heating load TES 342A and the cooling load TES 342B may be configured to store thermal energy as latent heat and/or sensible heat. For latent heat storage, the heating load TES 342A and the cooling load TES 342B may each include a PCM. The material and construction of each TES may be selected based on its intended thermal function. For example, the heating load TES 342A may be adapted to store and provide thermal heat energy. Accordingly, the heating load TES 342A may utilize a PCM with a higher phase-change temperature suitable for space heating applications. The cooling load TES 342B may be adapted to store and provide cool energy (i.e., function as a heat sink). Accordingly, the cooling load TES 342B may utilize a PCM with a lower phase-change temperature suitable for space cooling applications.

In one or more embodiments, the heating load TES 342A may configured to provide heat to a fluid that may be circulated through the HVAC system 300, while the cooling load TES 342B is configured to absorb heat from the fluid. In some operational modes, the fluid may flow bidirectionally through the heating load TES 342A and the cooling load TES 342B to enable both charging and discharging operations.

In one or more embodiments, each of the heating load assembly 340A and the cooling load assembly 340B may include a dedicated flow control assembly to manage the circulation of fluid. The flow control assembly for each sub-assembly 340A, 340B may include at least one flow selection valve and a corresponding pump. For instance, the heating load assembly 340A may include flow selection valves (such as SV1 and SV4) and a pump 344A. Similarly, the cooling load assembly 340B may include flow selection valves (such as SV2 and SV5) and a pump 344B. The pump 344A may be configured to circulate a fluid through the heating load TES 342A, and the pump 344B may be configured to circulate a fluid through the cooling load TES 342B, respectively.

In one or more embodiments, the heating load assembly 340A may include a first flow selection valve (such as solenoid valve SV1) in selective fluidic communication with the DHW system 330. In one or more embodiments, the cooling load assembly 340B may include a first flow selection valve (such as solenoid valve SV2) in selective fluidic communication with the ODU 310. Each of the heating load assembly 340A and the cooling load assembly 340B may further include a corresponding second flow selection valve (such as solenoid valves SV4 and SV5, respectively). The second flow selection valve of the heating load assembly 340A (such as SV4) and the second flow selection valve of the cooling load assembly 340B (such as SV5) may each be in selective fluidic communication with at least one of the IDU 320 and the ODU 310.

Referring to FIG. 3B, the heating load assembly 340A may be fluidically coupled to receive fluid from the IDU 320, the outdoor heat exchanger 316, and/or the DHW system 330. Further, the heating load assembly 340A may be configured to direct the fluid received from the IDU 320 and the outdoor heat exchanger 316 to the DHW system 330, and/or direct the fluid received from the DHW system 330 to the outdoor heat exchanger 316. In parallel, the cooling load assembly 340B may be fluidically coupled to receive fluid from outdoor heat exchanger 316. Further, the cooling load assembly 340B may be configured to direct the fluid to the compressor 312. In one or more embodiments, the pumps 344A, 344B may be configured to pump/circulate the fluid from the heating load assembly 340A and the cooling load assembly 340B to the IDU 320, respectively.

In one or more embodiments, the HVAC system 300 may be configured to selectively isolate at least one of the TES module 340 or the ODU 310 from the IDU 320 and/or the DHW system 330. For example, during space conditioning operational modes (such as space cooling or space heating), the TES module 340 may be selectively isolated from the IDU 320, the ODU 310, and/or the DHW 330. The TES module 340 may be isolated by actuating the flow selection valves associated with the TES module 340 (such as SV1, SV2, SV4, and SV5) to a closed position, thereby preventing fluid from entering the heating load assembly 340A or the cooling load assembly 340B. Conversely, during TES conditioning operational modes (such as charging or discharging the TES 342A or 342B), the ODU 310 may be selectively isolated, by closing the valves that control flow to the IDU 320 and the DHW system 330 (such as SV3, SV6, SV7), allowing fluid to circulate between the IDU 320, and the TES module 340.

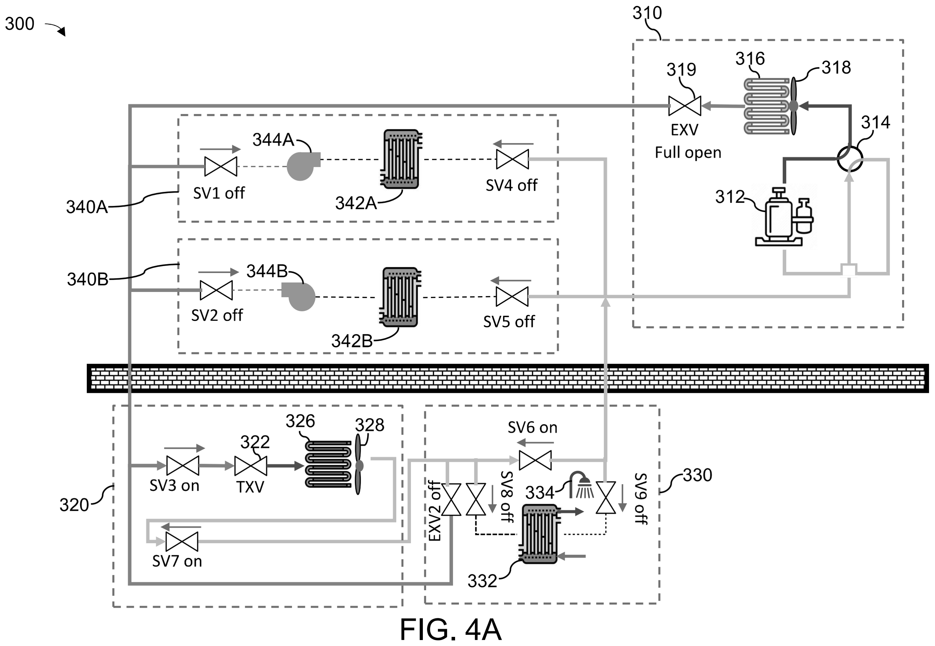

Referring to FIG. 4A, a schematic diagram of the HVAC system 300 operating in a space cooling mode is shown. In the space cooling mode, the HVAC system 300 may be configured to provide cooling to the indoor environment by absorbing heat at the IDU 320 and rejecting the heat at the ODU 310. The TES module 340 may be fluidically isolated from the rest of the system. In the TES module 340, the flow selection valves SV1, SV2, SV4, and SV5 may be in a closed/off position. In the IDU 320, solenoid valves SV3 and SV7 may be in an open/on position. In the DHW system 330, solenoid valve SV6 may be in an open/on position, while valves EXV2, SV8, and SV9 may be in a closed/off position to bypass the DHW TES 332. The outdoor expansion device 319 may be in a fully open position. Both the outdoor fan 318 and the indoor fan 328 may be actuated.

In one or more embodiments, the space cooling cycle may be initiated by the compressor 312, which compresses a fluid into a high-pressure, high-temperature vapor. The reversing valve 314 directs the hot vapor fluid to the outdoor heat exchanger 316. With the outdoor fan 318 operating, the outdoor heat exchanger 316 functions as a condenser, rejecting heat to the outdoor environment and causing the fluid to condense into a high-pressure liquid.

In one or more embodiments, the high-pressure liquid fluid flows from the outdoor heat exchanger 316 through the outdoor expansion device 319 that may be fully open to the indoor side. The fluid enters the IDU 320 through the open solenoid valve SV3 and is then expanded by the indoor expansion device 322. The expansion transforms the fluid into a low-pressure, low-temperature two-phase mixture.

In one or more embodiments, the cold, two-phase fluid flows into the indoor heat exchanger 326. With the indoor fan 328 circulating indoor air, the indoor heat exchanger 326 functions as an evaporator, absorbing heat from the indoor space and providing a cooling effect. The absorption of heat causes the fluid to evaporate into a low-pressure vapor.

In one or more embodiments, the low-pressure vapor fluid exits the IDU 320 through the open solenoid valve SV7. The fluid then flows through the open solenoid valve SV6 of the DHW system 330, bypassing the DHW TES 332. The fluid returns to the ODU 310, where the reversing valve 314 directs the low-pressure vapor to the suction line of the compressor 312.

In one or more embodiments, the HVAC system 300 may be operated in the space cooling mode when there is a cooling demand and the TES module 340 is charged. The space cooling mode may be utilized during off-peak electricity periods when the cost of power is below a first threshold, or when the cooling load TES 342B, for instance, is fully/sufficiently charged with cool energy.

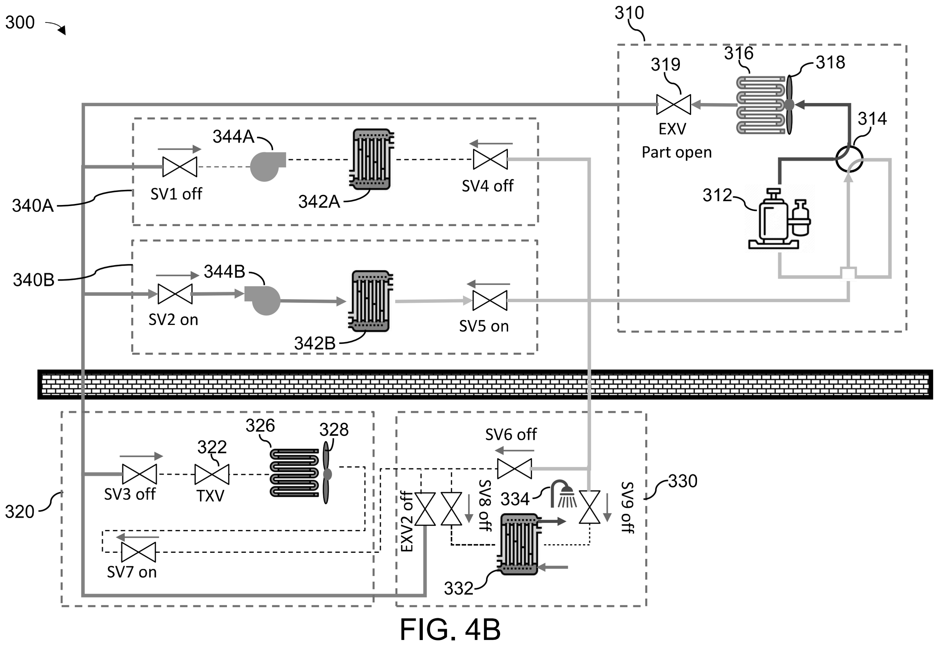

Referring to FIG. 4B, a schematic diagram of the HVAC system 300 operating in a cooling charge mode is shown. In the cooling charge mode, the HVAC system 300 may be configured to store cool energy in the cooling load TES 342B (i.e., remove thermal energy from the cooling load TES 342B to prepare the cooling load TES 342B to absorb/remove heat from the indoor environment). In cooling charge mode, the heating load assembly 340A may be fluidically isolated, with valves SV1 and SV4 in a closed/off position. In the cooling load assembly 340B, valves SV2 and SV5 may be in an open/on position. On the indoor side, the IDU 320 and DHW system 330 may be isolated, with valves SV3, SV6, EXV2, SV8, and SV9 in a closed/off position. The outdoor expansion device 319 may be in a partially open position. The outdoor fan 318 may be actuated, while the indoor fan 328 and the pump 344B may be deactivated.

In one or more embodiments, the cooling charge cycle may be initiated by the compressor 312, which compresses a fluid into a high-pressure, high-temperature vapor. The reversing valve 314 directs the hot vapor fluid to the outdoor heat exchanger 316. With the outdoor fan 318 operating, the outdoor heat exchanger 316 functions as a condenser, rejecting heat to the outdoor environment and causing the fluid to condense into a high-pressure liquid.

In one or more embodiments, the high-pressure liquid fluid flows from the outdoor heat exchanger 316 through the partially open outdoor expansion device 319. The expansion in the device 319 reduces the pressure and temperature of the fluid. The fluid then flows to the TES module 340.

In one or more embodiments, since valve SV1 is closed, the fluid is directed to the cooling load assembly 340B through the open valve SV2. The fluid then flows into the cooling load TES 342B. The cooling load TES 342B functions as an evaporator, absorbing heat from the fluid and thereby storing cool energy. The absorption of heat causes the fluid to evaporate into a low-pressure vapor.

In one or more embodiments, the low-pressure vapor fluid exits the cooling load TES 342B and flows through the open valve SV5 back to the ODU 310. The reversing valve 314 directs the low-pressure vapor to the suction line of the compressor 312.

In one or more embodiments, the HVAC system 300 may be operated in the cooling charge mode during off-peak electricity periods when the cost of power is below a second threshold. The cooling charge mode allows the system 300 to store cooling capacity for later use, enabling energy load shifting. The cooling charge mode may be terminated when the cooling load TES 342B is determined to be fully charged with cool energy or when the low-cost energy period ends.

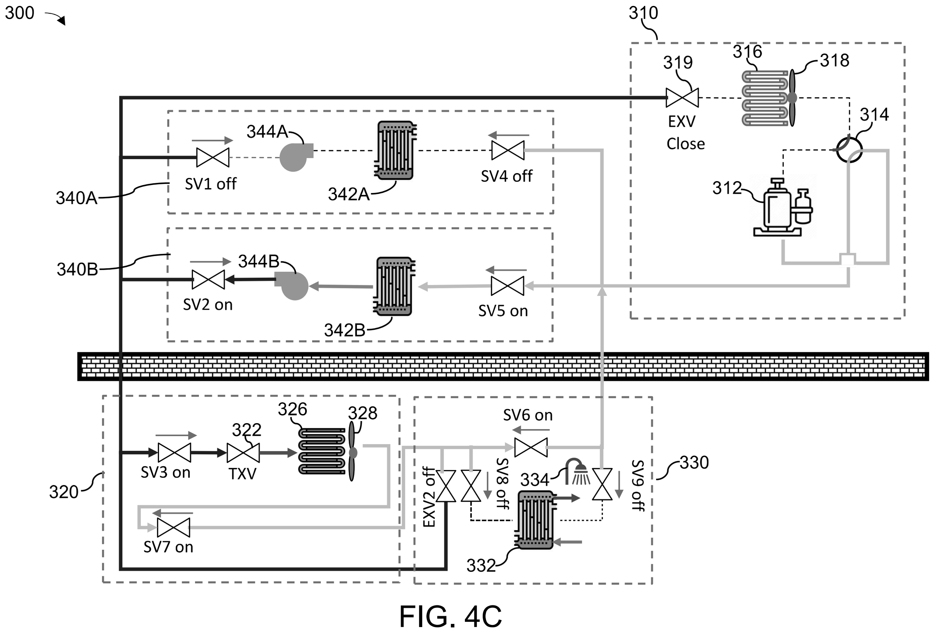

Referring to FIG. 4C, a schematic diagram of the HVAC system 300 operating in a cooling discharge mode is shown. In the cooling discharge mode, the HVAC system 300 may be configured to provide cooling to the indoor environment by utilizing cool energy from the cooling load TES 342B. During the cooling discharge mode, the ODU 310 is isolated, with the outdoor expansion device 319 in a closed position, and the outdoor fan 318 and the compressor 312 deactivated, thereby saving on power expenditure/costs. The heating load assembly 340A is also isolated, with valves SV1 and SV4 in a closed/off position. In the cooling load assembly 340B, valves SV2 and SV5 are in an open/on position. In the IDU 320, valves SV3 and SV7 are open. In the DHW system 330, valve SV6 is open while valves EXV2, SV8, and SV9 are closed to bypass the DHW TES 332. The pump 344B and the indoor fan 328 may be actuated.

In one or more embodiments, the cooling discharge cycle may be driven by the pump 344B, which circulates a fluid in a closed loop between the cooling load assembly 340B and the IDU 320, without operating the compressor 312. The pump 344B may be configured to circulate the fluid through the cooling load TES 342B. As the fluid passes through the cooling load TES 342B, the fluid is cooled by the stored cool energy in the cooling load TES 342B, exiting as a cool, low-pressure liquid.

In one or more embodiments, the cool liquid fluid exits the cooling load assembly 340B through the open valve SV5 and flows to the indoor side. The fluid passes through the open valve SV6 of the DHW system 330, bypassing the DHW TES 332, and then flows through the open valve SV3 to enter the IDU 320.

In one or more embodiments, the cold fluid (which may pass through the indoor expansion device 322) may then enters the indoor heat exchanger 326. With the indoor fan 328 operating, the indoor heat exchanger 326 functions as an evaporator. The fluid absorbs heat from the indoor air, providing a cooling effect to the space and causing the fluid to evaporate into a low-pressure vapor.

In one or more embodiments, the low-pressure vapor fluid exits the IDU 320 through the open valve SV7 and returns to the cooling load assembly 340B through the open valve SV2. The vapor fluid then enters the cooling load TES 342B, which functions as a condenser. The fluid rejects heat to the cool storage medium within the cooling load TES 342B, causing the fluid to condense back into a liquid. The pump 344B then recirculates the liquid fluid to continue the cycle.

In one or more embodiments, the HVAC system 300 may be operated in the cooling discharge mode during peak electricity periods when the cost of power is above a first/third threshold. By using the pump 344B instead of the energy-intensive compressor 312 and by keeping the outdoor fan 318 off, the cooling discharge mode allows the HVAC system 300 to provide space cooling with reduced electricity consumption. The cooling discharge mode may be terminated when the cooling demand is met, the cool energy in the cooling load TES 342B is depleted, or the peak-cost energy period ends.

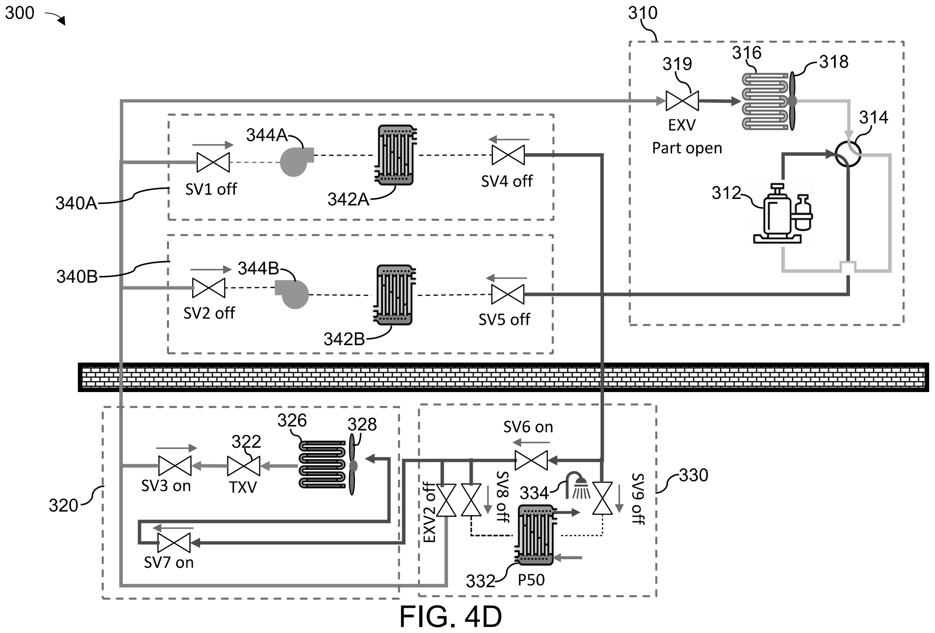

Referring to FIG. 4D, a schematic diagram of the HVAC system 300 operating in a space heating mode is shown. In the space heating mode, the HVAC system 300 may be configured to provide heating to the indoor environment by absorbing heat at the ODU 310 and rejecting heat at the IDU 320. In the space heating mode, the TES module 340 is fluidically isolated, with valves SV1, SV2, SV4, and SV5 in a closed/off position. In the IDU 320, valves SV3 and SV7 are in an open/on position. In the DHW system 330, valve SV6 is open, while valves EXV2, SV8, and SV9 are closed to bypass the DHW TES 332. The outdoor expansion device 319 may be in a partially open position. Both the outdoor fan 318 and the indoor fan 328 may be actuated.

In one or more embodiments, the space heating cycle may be initiated by the compressor 312, which compresses a fluid into a high-pressure, high-temperature vapor. The reversing valve 314 directs the hot vapor fluid to the indoor side. The fluid flows through the open valve SV6 of the DHW system 330, bypassing the DHW TES 332.

In one or more embodiments, the hot vapor fluid from the DHW system 330 flows through the open valve SV7 to enter the indoor heat exchanger 326. With the indoor fan 328 operating, the indoor heat exchanger 326 functions as a condenser, rejecting heat to the indoor air and providing a heating effect. The rejection of heat causes the fluid to condense into a high-pressure liquid.

In one or more embodiments, the high-pressure liquid fluid exits the indoor heat exchanger 326, passes through the indoor expansion device 322, and returns to the outdoor side through the open valve SV3. The fluid then flows through the partially open outdoor expansion device 319, which expands the fluid into a low-pressure, low-temperature two-phase mixture.

In one or more embodiments, the cold, two-phase fluid enters the outdoor heat exchanger 316. With the outdoor fan 318 operating, the outdoor heat exchanger 316 functions as an evaporator, absorbing heat from the outdoor environment and causing the fluid to evaporate into a low-pressure vapor. The resulting low-pressure vapor is directed by the reversing valve 314 to the suction line of the compressor 312, completing the cycle.

In one or more embodiments, the HVAC system 300 may be operated in the space heating mode when there is a heating demand and the TES module 340 is not required for the operation (such as when fully charged to discharged). The space heating mode may be utilized during off-peak electricity periods when the cost of power is below a first threshold, or when the heating load TES 342A is already sufficiently charged with heat.

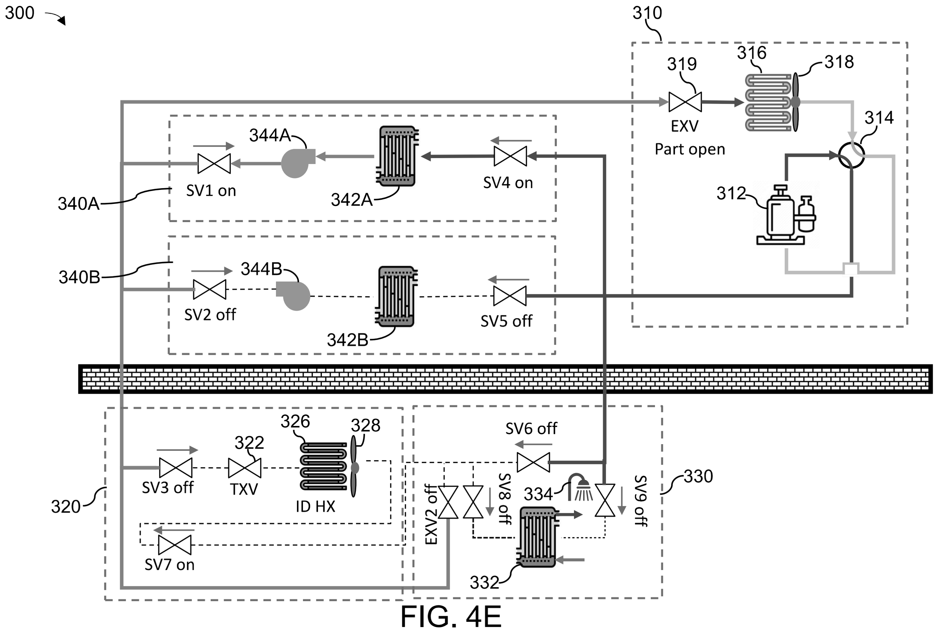

Referring to FIG. 4E, a schematic diagram of the HVAC system 300 operating in a heating charge mode is shown. In the heating charge mode, the HVAC system 300 may be configured to store heat in the heating load TES 342A. In the heating charge mode, the cooling load assembly 340B is fluidically isolated, with valves SV2 and SV5 in a closed/off position. In the heating load assembly 340A, valves SV1 and SV4 are in an open/on position. On the indoor side, the IDU 320 and DHW system 330 are isolated, with valves SV3, SV6, EXV2, SV8, and SV9 in a closed/off position. The outdoor expansion device 319 may be in a partially open position. The outdoor fan 318 may be actuated, while the indoor fan 328 and the pump 344A may be deactivated.

In one or more embodiments, the heating charge mode may be initiated by the compressor 312, which compresses a fluid into a high-pressure, high-temperature vapor. The reversing valve 314 directs the hot vapor fluid to the heating load assembly 340A through the open valve SV4.

In one or more embodiments, the hot vapor fluid enters the heating load TES 342A. The heating load TES 342A functions as a condenser, where the fluid rejects heat to the heating load TES 342A, thereby storing heat. The rejection of heat causes the fluid to condense into a high-pressure liquid.

In one or more embodiments, the high-pressure liquid fluid exits the heating load TES 342A and flows through the open valve SV1. The fluid then flows to the outdoor expansion device 319. The outdoor expansion device 319, which may be partially open, expands the fluid into a low-pressure, low-temperature two-phase mixture.

In one or more embodiments, the cold, two-phase fluid enters the outdoor heat exchanger 316. With the outdoor fan 318 operating, the outdoor heat exchanger 316 functions as an evaporator. The fluid absorbs heat from the outdoor environment and evaporates into a low-pressure vapor. The resulting low-pressure vapor is directed by the reversing valve 314 to the suction line of the compressor 312 to complete the cycle.

In one or more embodiments, the HVAC system 300 may be operated in the heating charge mode during off-peak electricity periods when the cost of power is below a second threshold. The heating charge mode allows the system 300 to store heat for later use in space heating or DHW applications, enabling energy load shifting. The heating charge mode may be terminated when the heating load TES 342A is determined to be fully charged with heat or when the low-cost energy period ends.

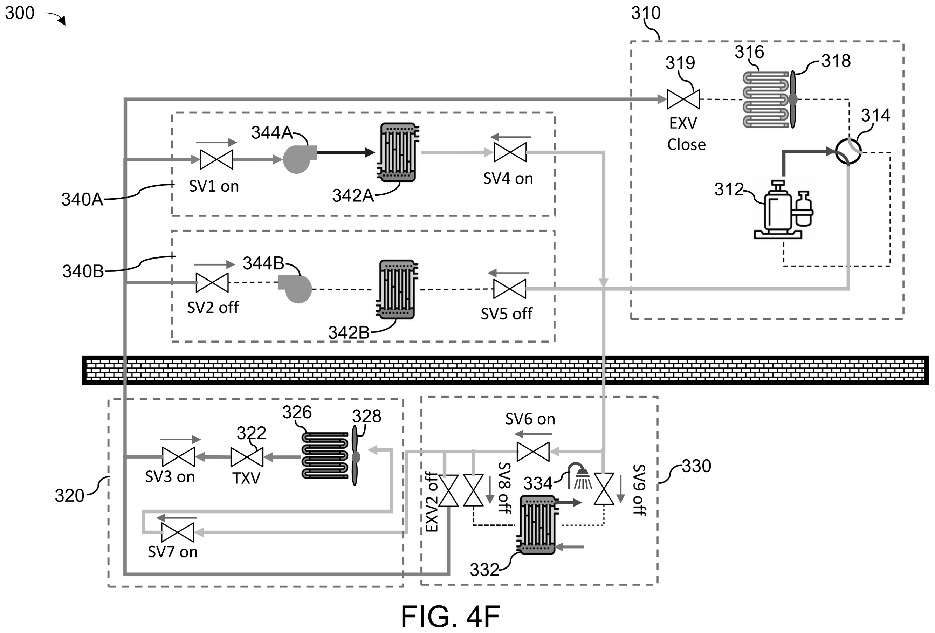

Referring to FIG. 4F, a schematic diagram of the HVAC system 300 operating in a heating discharge mode is shown. In the heating discharge mode, the HVAC system 300 may be configured to provide heating to the indoor environment by utilizing heat from the heating load TES 342A. During the heating discharge mode, the ODU 310 is isolated, with the outdoor expansion device 319 in a closed position, and the compressor 312 and outdoor fan 318 deactivated. The cooling load assembly 340B is also isolated, with valves SV2 and SV5 in a closed/off position. In the heating load assembly 340A, valves SV1 and SV4 are in an open/on position. In the IDU 320, valves SV3 and SV7 are open. In the DHW system 330, valve SV6 is open, while valves EXV2, SV8, and SV9 are closed to bypass the DHW TES 332. The pump 344A and the indoor fan 328 may be actuated.

In one or more embodiments, the heating discharge cycle may be driven by the pump 344A, which circulates a fluid in a closed loop between the heating load assembly 340A and the IDU 320. The pump 344A circulates the fluid through the heating load TES 342A. As the fluid passes through the heating load TES 342A, the fluid absorbs heat from the storage medium, exiting as a hot liquid fluid.

In one or more embodiments, the hot liquid fluid exits the heating load assembly 340A through the open valve SV4 and flows to the indoor side. The fluid passes through the open valve SV6 of the DHW system 330, bypassing the DHW TES 332, and subsequently flows through the open valve SV7 to enter the indoor heat exchanger 326.

In one or more embodiments, with the indoor fan 328 operating, the indoor heat exchanger 326 functions as a condenser or radiator. The hot fluid rejects heat to the indoor air, providing a heating effect to the space. After rejecting heat, the fluid exits the indoor heat exchanger 326 as a cooled liquid.

In one or more embodiments, the cooled liquid fluid passes through the indoor expansion device 322 and the open valve SV3. The fluid then returns to the heating load assembly 340A through the open valve SV1, where the pump 344A recirculates the fluid to continue the cycle.

In one or more embodiments, the HVAC system 300 may be operated in the heating discharge mode during peak electricity periods when the cost of power is above a first threshold, or when outdoor temperatures are extremely low. By using the pump 344A instead of the compressor 312, the heating discharge mode allows the system 300 to provide space heating with reduced electricity consumption. The heating discharge mode may be terminated when the heating demand is met, the heat in the heating load TES 342A is depleted, or the peak-cost energy period ends.

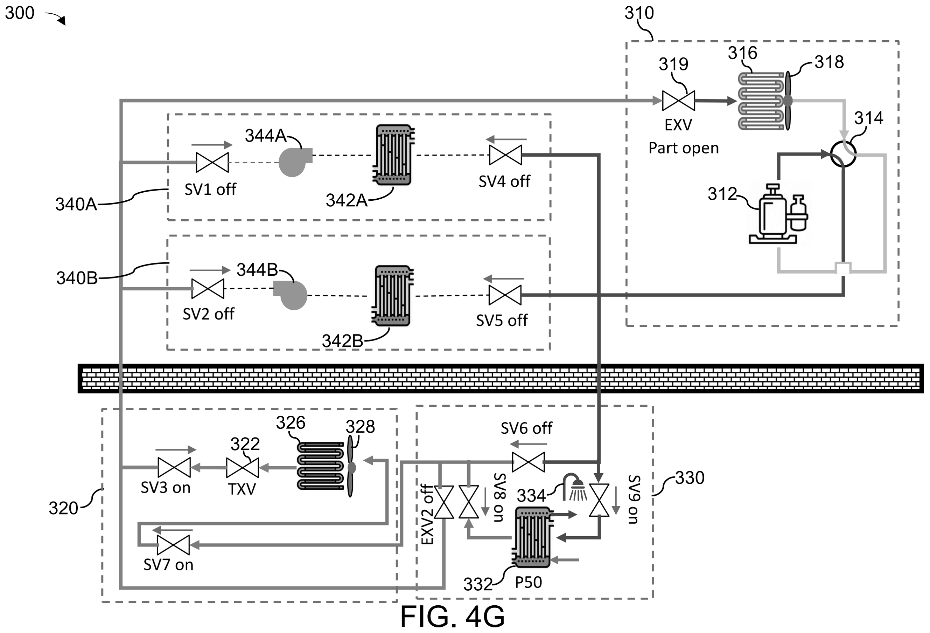

Referring to FIG. 4G, a schematic diagram of the HVAC system 300 operating in a combined space heating and DHW charging mode is shown. In the combined space heating and DHW charging mode, the HVAC system 300 may be configured to provide heating to the indoor environment via the IDU 320 while simultaneously storing heat in the DHW TES 332. In the combined space heating and DHW charging mode, the TES module 340 is isolated, with valves SV1, SV2, SV4, and SV5 in a closed/off position. In the IDU 320, valves SV3 and SV7 are open. In the DHW system 330, valves SV8 and SV9 are open, while valves SV6 and EXV2 are closed. The outdoor expansion device 319 may be in a partially open position. Both the outdoor fan 318 and the indoor fan 328 may be actuated.

In one or more embodiments, the combined space heating and DHW charging operational mode may be initiated by the compressor 312, which compresses a fluid into a high-pressure, high-temperature vapor. The reversing valve 314 directs the hot vapor fluid to the indoor side. The flow of hot vapor fluid is then split to simultaneously serve the IDU 320 and the DHW system 330.

In one or more embodiments, the hot vapor fluid flows through the open valve SV8 and into the DHW TES 332. The DHW TES 332 functions as a condenser, where the fluid rejects heat to the storage medium, thereby charging the DHW TES 332. Then, the fluid is directed from the DHW TES 332 through the open valve SV7 to the indoor heat exchanger 326.

In one or more embodiments, with the indoor fan 328 operating, the indoor heat exchanger 326 also functions as a condenser. The hot vapor fluid rejects heat to the indoor air, providing a heating effect to the indoor space. The fluid from both the DHW TES 332 (after passing through the open valve SV9) and the indoor heat exchanger 326 condenses into a high-pressure liquid fluid.

In one or more embodiments, the combined high-pressure liquid fluid passes through the indoor expansion device 322 and returns to the outdoor side through the open valve SV3. The fluid is then expanded by the partially open outdoor expansion device 319 into a low-pressure, low-temperature two-phase mixture.

In one or more embodiments, the cold, two-phase fluid enters the outdoor heat exchanger 316. With the outdoor fan 318 operating, the outdoor heat exchanger 316 functions as an evaporator, absorbing heat from the ambient air and causing the fluid to evaporate into a low-pressure vapor. The resulting vapor is directed by the reversing valve 314 to the suction line of the compressor 312 to complete the cycle.

In one or more embodiments, the HVAC system 300 may be operated in the combined space heating and DHW charging mode when there is a simultaneous demand for space heating and a need to charge the DHW TES 332. The combined space heating and DHW charging mode may be particularly useful during off-peak periods to meet immediate heating needs while storing energy for future hot water use.

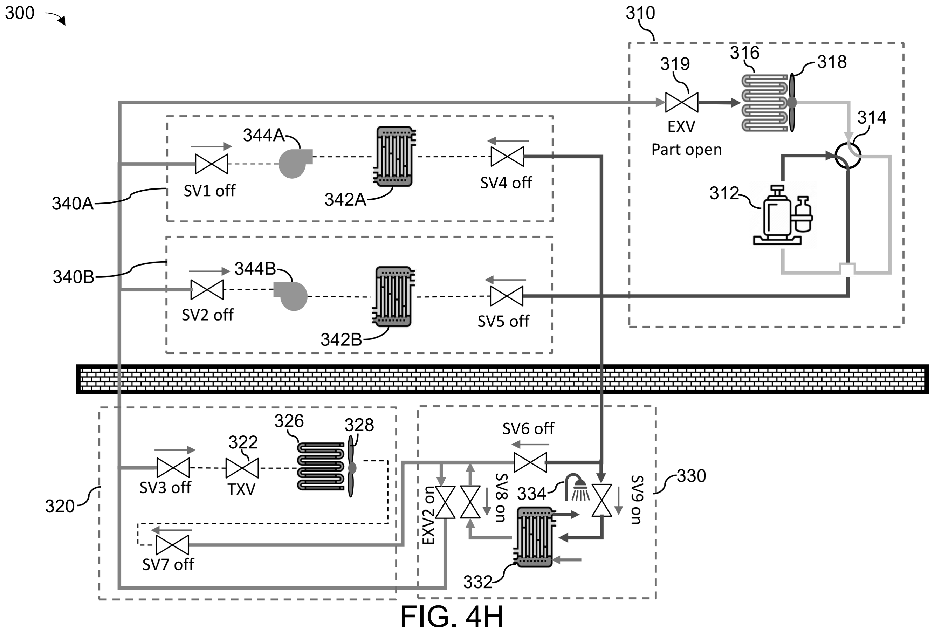

Referring to FIG. 4H, a schematic diagram of the HVAC system 300 operating in a DHW charging mode is shown. In the DHW charging mode, the HVAC system 300 may be configured to store heat in the DHW TES 332 without providing any space conditioning. In the DHW charging mode, both the TES module 340 and the IDU 320 are isolated. Valves SV1, SV2, SV4, SV5, SV3, and SV7 may be in a closed/off position. In the DHW system 330, valves SV8 and SV9 are open, while valve SV6 is closed. Expansion valve EXV2 is also in an open or active state. The outdoor expansion device 319 may be in a partially open position. The outdoor fan 318 may be actuated, while the indoor fan 328 is deactivated.

In one or more embodiments, the DHW charging cycle may be initiated by the compressor 312, which compresses a fluid into a high-pressure, high-temperature vapor. The reversing valve 314 directs the hot vapor fluid to the indoor side, i.e., to the DHW system 330 through the open valve SV9.

In one or more embodiments, the hot vapor fluid enters the DHW TES 332. The DHW TES 332 functions as a condenser, where the fluid rejects heat to the storage medium, thereby charging the DHW TES 332 with heat. The rejection of heat causes the fluid to condense into a high-pressure liquid.

In one or more embodiments, the high-pressure liquid fluid exits the DHW TES 332 and flows through the open valve SV8 and the open expansion valve EXV2. The fluid then returns to the outdoor side and flows through the partially open outdoor expansion device 319. The expansion in the expansion devices EXV2 and/or 319 may transform the fluid into a low-pressure, low-temperature two-phase mixture.

In one or more embodiments, the cold, two-phase fluid enters the outdoor heat exchanger 316. With the outdoor fan 318 operating, the outdoor heat exchanger 316 functions as an evaporator, absorbing heat from the ambient air and causing the fluid to evaporate into a low-pressure vapor. The resulting vapor is directed by the reversing valve 314 to the suction line of the compressor 312.

In one or more embodiments, the HVAC system 300 may be operated in the DHW charging mode when there is a need to store heat for domestic hot water, such as during off-peak electricity periods. The DHW charging mode allows for the efficient generation of hot water capacity for later use, which may be discharged on demand via the utility 334.

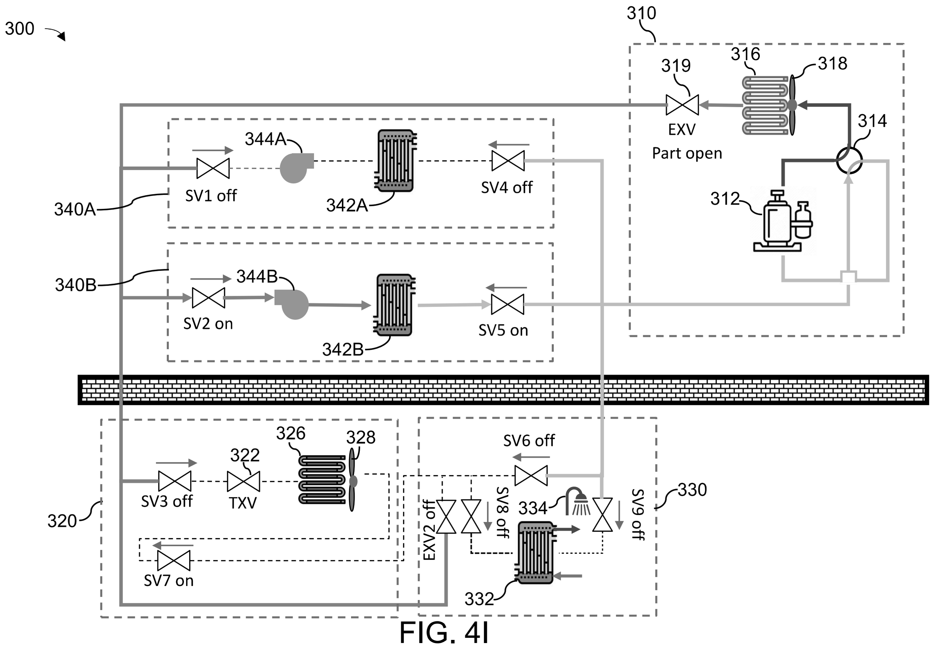

Referring to FIG. 4I, a schematic diagram of the HVAC system 300 operating in a defrost mode is shown. In the defrost mode, the HVAC system 300 may be configured to remove frost from the outdoor heat exchanger 316 by using the cooling load TES 342B as a heat source. In the defrost mode, the heating load assembly 340A, the IDU 320, and the DHW system 330 are isolated. In the cooling load assembly 340B, valves SV2 and SV5 are in an open/on position. The outdoor expansion device 319 may be in a partially open position.

In one or more embodiments, the defrost cycle may be initiated by the compressor 312, which compresses a fluid into a high-pressure, high-temperature vapor. The reversing valve 314 directs this hot vapor fluid to the outdoor heat exchanger 316.

In one or more embodiments, as the hot vapor flows through the coils of the outdoor heat exchanger 316, the fluid rejects heat. Since the outdoor fan 318 is off, the heat is transferred directly to the surfaces of the heat exchanger, which melts any accumulated frost or ice. During this process, the fluid condenses into a high-pressure liquid.

In one or more embodiments, the high-pressure liquid fluid flows from the outdoor heat exchanger 316 and is expanded by the partially open outdoor expansion device 319. The expansion reduces the pressure and temperature of the fluid, transforming the fluid into a low-pressure, two-phase mixture. The cold fluid is then directed to the cooling load assembly 340B through the open valve SV2.

In one or more embodiments, the cooling load TES 342B functions as an evaporator, where the fluid absorbs heat from the cooling load TES 342B. The absorption of heat allows cool energy to be stored in the cooling load TES 342B, thereby providing the necessary heat to continue the defrost cycle at the outdoor heat exchanger 316, while simultaneously charging the cooling load TES 342B with cool energy. The absorption of heat causes the fluid to evaporate into a low-pressure vapor.

In one or more embodiments, the low-pressure vapor fluid exits the cooling load TES 342B and flows through the open valve SV5. The fluid returns to the ODU 310, where the reversing valve 314 directs the vapor to the suction line of the compressor 312, which completes the cycle.

In one or more embodiments, the HVAC system 300 may initiate the defrost mode automatically when sensors detect frost buildup on the outdoor heat exchanger 316 during heating operations. By using the cooling load TES 342B as the heat source, the HVAC system 300 can perform a defrost cycle without reversing the flow to the indoor unit, thereby avoiding the introduction of cold air into the conditioned space and improving user comfort, while charging the cooling load TES 342B.

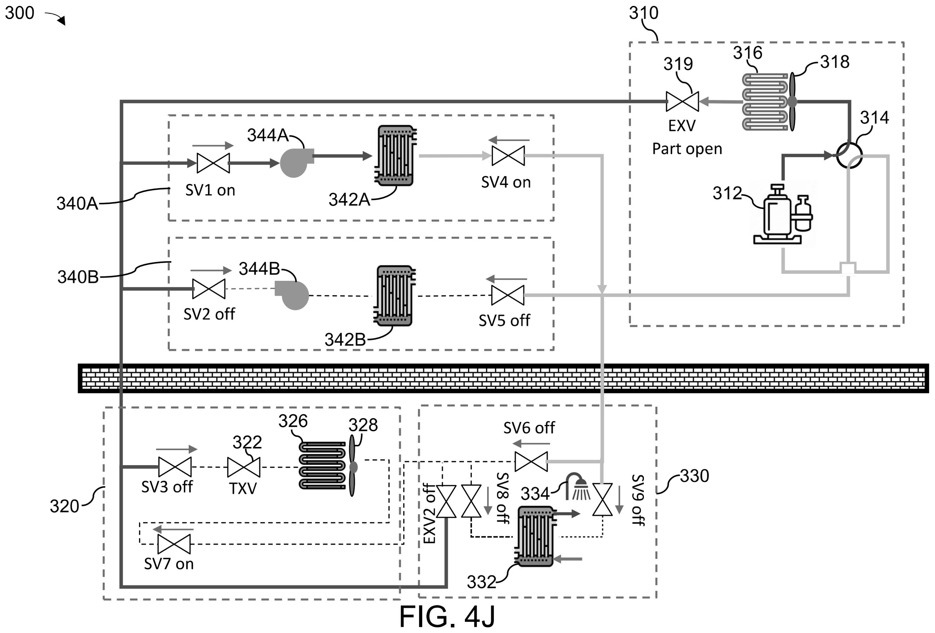

Referring to FIG. 4J, a schematic diagram of the HVAC system 300 operating in another defrost mode is shown. In this defrost mode, the HVAC system 300 may be configured to remove frost from the outdoor heat exchanger 316 by using the heating load TES 342A as a heat source. In this defrost mode, the cooling load assembly 340B, the IDU 320, and the DHW system 330 are fluidically isolated. In the heating load assembly 340A, valves SV1 and SV4 are in an open/on position. The outdoor expansion device 319 may be in a partially open position, and the outdoor fan 318 is deactivated.

In one or more embodiments, the defrost cycle may be initiated by the compressor 312, which compresses a fluid into a high-pressure, high-temperature vapor. The reversing valve 314 directs the hot vapor fluid to the outdoor heat exchanger 316.

In one or more embodiments, as the hot vapor flows through the outdoor heat exchanger 316, the fluid rejects heat, which melts any accumulated frost from the surfaces of the heat exchanger. Further, the fluid condenses into a high-pressure liquid.

In one or more embodiments, the high-pressure liquid fluid flows from the outdoor heat exchanger 316 and is expanded by the partially open outdoor expansion device 319, transforming the fluid into a low-pressure, low-temperature two-phase mixture. The cold fluid is then directed to the heating load assembly 340A through the open valve SV1.

In one or more embodiments, the heating load TES 342A, which may include previously stored heat, functions as an evaporator. The fluid absorbs heat from the storage medium, which provides the thermal energy necessary for the defrosting process at the outdoor heat exchanger 316. The absorption of heat causes the fluid to evaporate into a low-pressure vapor.

In one or more embodiments, the low-pressure vapor fluid exits the heating load TES 342A and flows through the open valve SV4. The fluid returns to the ODU 310, where the reversing valve 314 directs the vapor fluid to the suction line of the compressor 312.

In one or more embodiments, the HVAC system 300 may initiate the defrost mode as an alternative to using the cooling load TES. By utilizing the heating load TES 342A as the heat source, the HVAC system 300 can perform a defrost cycle even if the cooling load TES is depleted. Such capability enhances the operational flexibility and reliability of the HVAC system 100 in cold conditions.

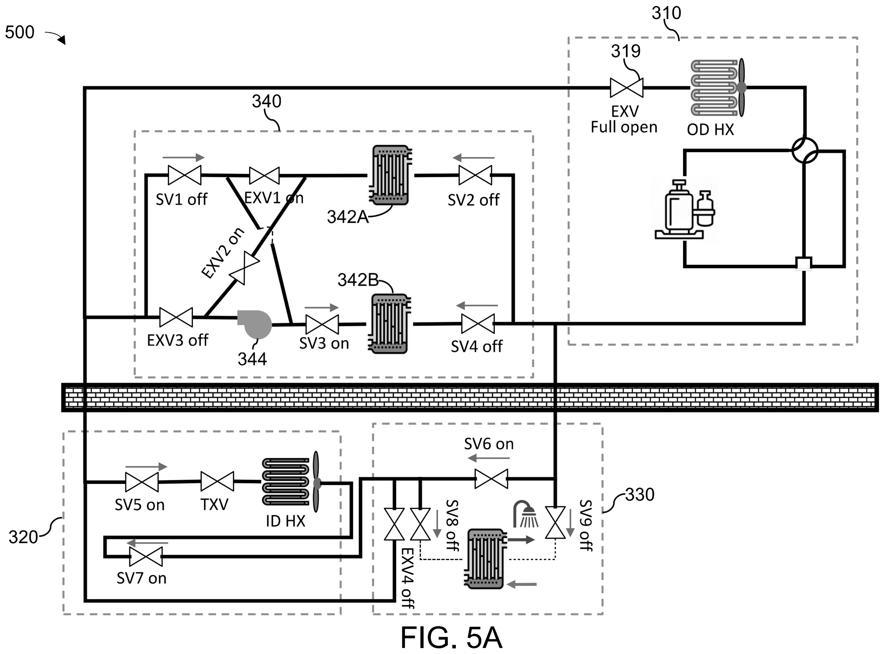

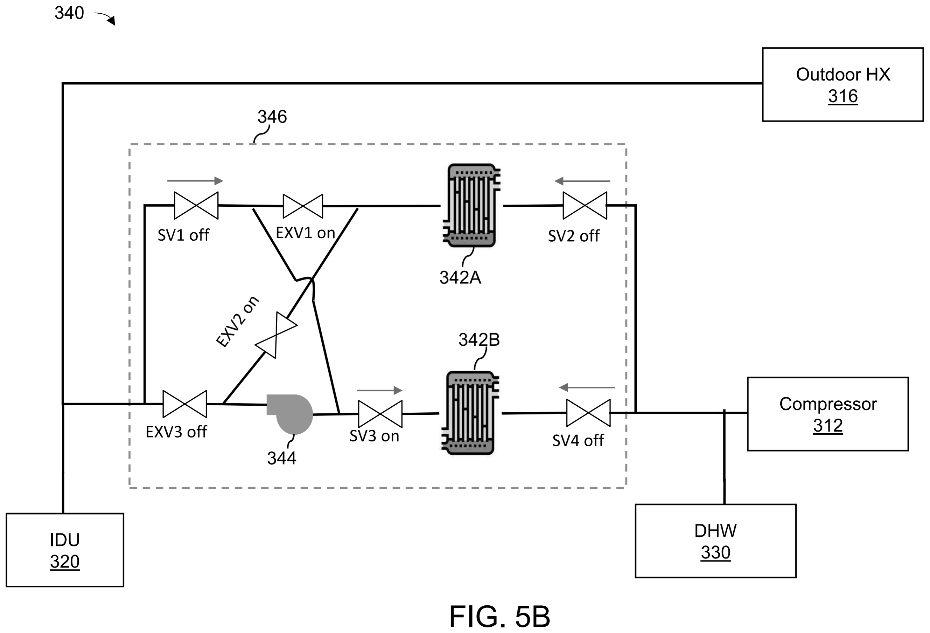

Referring to FIGs. 5A and 5B, another embodiment of an HVAC system 500 is shown. The HVAC system 500 may include an ODU 310, an IDU 320, and a DHW system 330, with components numbered and implemented similarly to those in the HVAC system 300, such as the outdoor heat exchanger 316 and the indoor heat exchanger 326.

In one or more embodiments, the HVAC system 500 includes a TES module 340, which may in turn include a heating load TES 342A and a cooling load TES 342B arranged in parallel. The TES module 340 further includes a flow control assembly 346. The flow control assembly 346 may be configured to selectively enable fluidic communication from the heating load assembly and the cooling load assembly to the ODU 310, the IDU 320, and/or the DHW system 330, or vice-versa. Based on the selected operational mode, the TES module 340 may be fluidically isolated from or connected to the rest of the HVAC system 500.

In one or more embodiments, the flow control assembly 346 may be configured to achieve the same operational modes as the HVAC system 300 but with a single pump 344. The flow control assembly 346 may include at least one flow selection valve, such as solenoid valves SV1, SV2, SV3, and SV4, and at least one diversion valve, such as expansion valves EXV1, EXV2, and EXV3.

In one or more embodiments, the heating load TES 342A and the cooling load TES 342B may each be flanked by a first and a second valve. For example, solenoid valves SV1 and SV2 may be disposed around the heating load TES 342A, and solenoid valves SV3 and SV4 may be disposed around the cooling load TES 342B. In addition, the flow control assembly 346 may include a set of diversion valves (such as EXV1, EXV2, and EXV3) arranged around the pump 344. This arrangement may be configured to ensure unidirectional fluid flow from the pump 344, regardless of whether the pump 344 is active or inactive, by selectively routing the fluid through an appropriate path.

In one or more embodiments, the heating load TES 342A and the cooling load TES 342B are disposed on parallel fluidic circuits. The flow control assembly 346 may include at least one diversion valve (such as expansion valve EXV2) configured to fluidically cross-couple the parallel circuits. The cross-coupling arrangement enables the single pump 344 to selectively direct fluid to either the heating load TES 342A or the cooling load TES 342B, providing the flexibility to operate in various modes with a reduced component count compared to the HVAC systems with dedicated pumps for each TES unit.

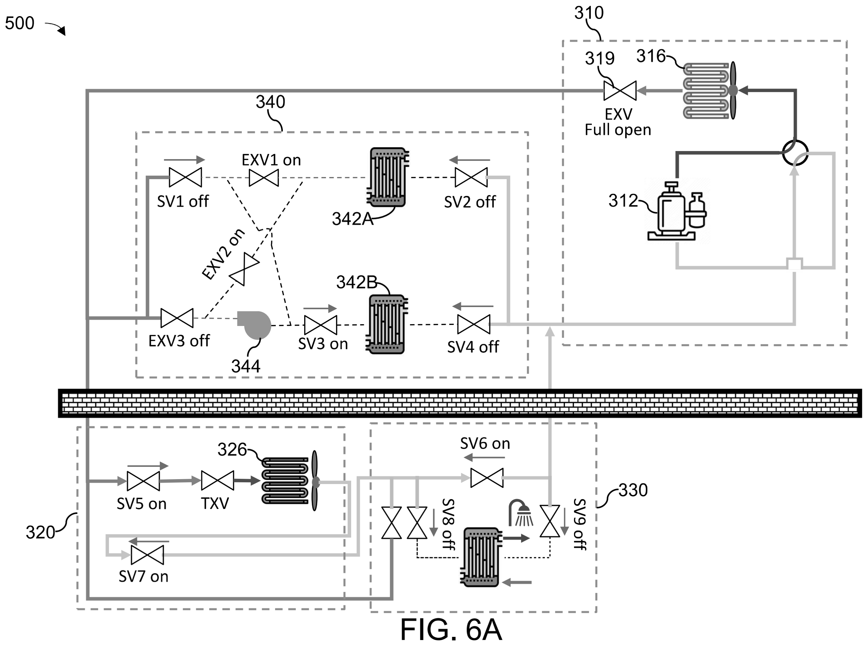

Referring to FIG. 6A, a schematic diagram of the HVAC system 500 operating in a space cooling mode is shown. In the space cooling mode, the HVAC system 500 may be configured to provide cooling to the indoor environment by absorbing heat at the IDU 320 and rejecting heat at the ODU 310. In the TES module 340, valves SV1, SV2, SV4, and EXV3 are in a closed/off position, thereby isolating the TES module 340 from the indoor side components and/or the ODU 310. Further, valves EXV1, EXV2, and SV3 may be in an open/on position or closed/off position. In the IDU 320, valves SV5 and SV7 are open. In the DHW system 330, valve SV6 is open, while valves SV8 and SV9 are closed to bypass the DHW TES 332, via the corresponding bypass assembly. The outdoor expansion device (EXV) is fully open. The outdoor fan and indoor fan are actuated, while the pump 344 is deactivated.

In one or more embodiments, the space cooling cycle may be initiated by the compressor, which compresses a fluid into a high-pressure, high-temperature vapor. The reversing valve directs the hot vapor to the outdoor heat exchanger 316. With the outdoor fan operating, the outdoor heat exchanger 316 functions as a condenser, rejecting heat to the outdoor environment and causing the fluid to condense into a high-pressure liquid.

In one or more embodiments, the high-pressure liquid fluid flows from the outdoor heat exchanger 316 through the fully open outdoor expansion device to the indoor side. The fluid enters the IDU 320 through the open valve SV5 and is expanded by the indoor expansion device (TXV) into a low-pressure, low-temperature two-phase mixture.

In one or more embodiments, the cold, two-phase fluid flows into the indoor heat exchanger 326. With the indoor fan operating, the indoor heat exchanger 326 functions as an evaporator, absorbing heat from the indoor space and providing a cooling effect. The absorption of heat causes the fluid to evaporate into a low-pressure vapor.

In one or more embodiments, the low-pressure vapor fluid exits the IDU 320 through the open valve SV7. The fluid then flows through the open valve SV6 of the DHW system 330, bypassing the DHW TES 332. The fluid returns to the TES module 340. The fluid flows through the open valves SV3, EXV2, and EXV1, bypassing the cooling load TES 342B, the pump 344, and the heating load TES 342A. The fluid then returns to the ODU 310, where the reversing valve directs the low-pressure vapor to the suction line of the compressor 312.

In one or more embodiments, the HVAC system 500 may be operated in the space cooling mode when there is a cooling demand. The space cooling mode may be utilized during off-peak electricity periods or when the cooling load TES 342B is already sufficiently charged with cool energy.

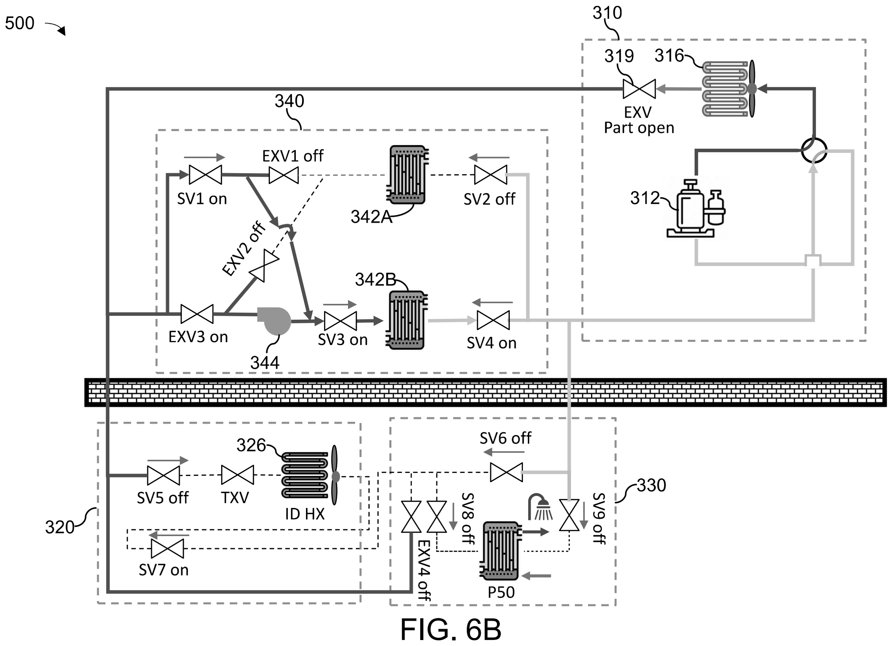

Referring to FIG. 6B, a schematic diagram of the HVAC system 500 operating in a cooling charge mode is shown. In the cooling charge mode, the HVAC system 500 may be configured to store cool energy in the cooling load TES 342B. In the cooling charge mode, the indoor side, including the IDU 320 and the DHW system 330, is isolated from the outdoor side. In the TES module 340, valves SV1, EXV3, SV3, and SV4 are in an open/on position, while valves EXV1, EXV2, and SV2 are in a closed/off position. The outdoor expansion device (EXV) is in a partially open position. The outdoor fan 318 is actuated, while the indoor fan 328 and the pump 344 are deactivated.

In one or more embodiments, the cooling charge mode may be initiated by the compressor 312, which compresses a fluid into a high-pressure, high-temperature vapor. The reversing valve directs the hot vapor fluid to the outdoor heat exchanger 316. With the outdoor fan 318 operating, the outdoor heat exchanger 316 functions as a condenser, where the fluid rejects heat to the ambient air and condenses into a high-pressure liquid.

In one or more embodiments, the high-pressure liquid fluid flows from the outdoor heat exchanger 316 and is expanded by the partially open outdoor expansion device. The expansion reduces the pressure and temperature of the fluid. The fluid is then directed to the TES module 340.

In one or more embodiments, the fluid is directed through the open valve EXV3 and subsequently through the open valve SV3 to enter the cooling load TES 342B. The valve arrangement, including the closed valve EXV2 and the routing through EXV3, ensures the fluid is directed to the intended TES unit and prevents fluid from flowing in an opposite direction relative to the orientation of the pump 344. The cooling load TES 342B functions as an evaporator, absorbing heat from the fluid and thereby storing cool energy. The absorption of heat causes the fluid to evaporate into a low-pressure vapor.

In one or more embodiments, the low-pressure vapor fluid exits the cooling load TES 342B and flows through the open valve SV4 back to the ODU 310. The reversing valve directs the low-pressure vapor to the suction line of the compressor 312.

In one or more embodiments, the HVAC system 500 may be operated in the cooling charge mode during off-peak electricity periods. The cooling charge mode allows the HVAC system 500 to store cooling capacity for later use, enabling energy load shifting. The cooling charge mode may be terminated when the cooling load TES 342B is determined to be fully charged with cool energy or when the low-cost energy period ends.

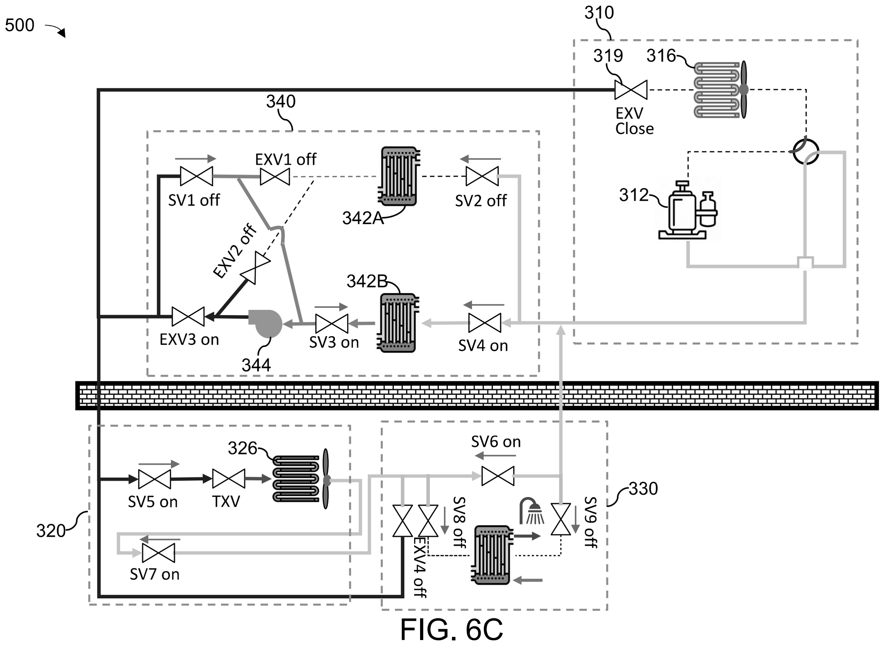

Referring to FIG. 6C, a schematic diagram of the HVAC system 500 operating in a cooling discharge mode is shown. In the cooling discharge mode, the HVAC system 500 may be configured to provide cooling to the indoor environment by utilizing cool energy from the cooling load TES 342B. During the cooling discharge mode, the ODU 310 is isolated, with the outdoor expansion device (EXV) in a closed position and the compressor 312 and outdoor fan deactivated. The heating load TES 342A is also isolated. In the TES module 340, valves SV1, EXV1, EXV2, and SV2 are in a closed/off position, while valves EXV3, SV3, and SV4 are in an open/on position. In the IDU 320, valves SV5 and SV7 are open. In the DHW system 330, valve SV6 is open, while valves SV8 and SV9 are closed to bypass the DHW TES 332. The pump 344 and the indoor fan 328 may be actuated.

In one or more embodiments, the cooling discharge cycle may be driven by the pump 344, which circulates a fluid in a closed loop between the TES module 340 and the IDU 320. The pump 344 draws the fluid through the cooling load TES 342B from the open valve SV4. As the fluid passes through the cooling load TES 342B, the fluid is cooled by the previously stored cool energy, exiting as a cool, low-pressure liquid.

In one or more embodiments, the cool liquid fluid exits (or is pumped from) the cooling load TES 342B through the diversion valve EXV3 to the indoor side. Since the valves SV1, EXV1, and EXV2 are closed, the fluid may be prevented from flowing into the heating load TES 342A. The fluid then flows through the open valve SV5 to enter the IDU 320.

In one or more embodiments, the fluid is expanded by the indoor expansion device (TXV), further reducing its temperature. The resulting cold, two-phase fluid then enters the indoor heat exchanger 326. With the indoor fan 328 operating, the indoor heat exchanger 326 functions as an evaporator, absorbing heat from the indoor air and providing a cooling effect. The absorption of heat causes the fluid to evaporate.

In one or more embodiments, the resulting low-pressure fluid exits the IDU 320 through the open valve SV7 and returns to the TES module 340. The fluid flows through the open valve SV6 to the suction side of the pump 344. Further, since the valves SV2 and SV9 are closed, the fluid may be prevented from entering into or passing through the heating load TES 342A and the DHW system 330, respectively. Also, since the compressor 312 is inactive, the fluid may also be prevented from flowing through the compressor 312.

In one or more embodiments, the HVAC system 500 may be operated in the cooling discharge mode during peak electricity periods when the cost of power is high (above a cost threshold, such as the third threshold). By using the pump 344 instead of the compressor 312, the cooling discharge mode allows the system 500 to provide space cooling with significantly reduced electricity consumption from the power grid. The cooling discharge mode may be terminated when the cooling demand is met or the cool energy in the cooling load TES 342B is depleted.

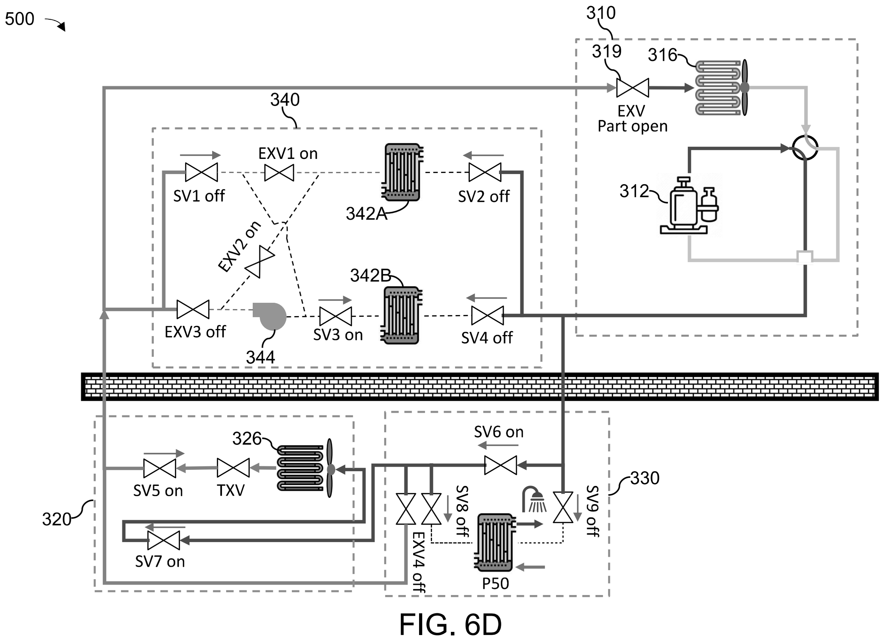

Referring to FIG. 6D, a schematic diagram of the HVAC system 500 operating in a space heating mode is shown. In the space heating mode, the HVAC system 500 may be configured to provide heating to the indoor environment by absorbing heat at the ODU 310 and rejecting heat at the IDU 320. In the TES module 340, valves SV1, EXV3, SV2, and SV4 are in a closed/off position, while valves EXV1 and EXV2 are in an open/on position or closed. In the IDU 320, valves SV5 and SV7 are open. In the DHW system 330, valve SV6 is open, while valves SV8 and SV9 are closed to bypass the DHW TES 332, through the corresponding bypass assembly thereof. The outdoor expansion device (EXV) is in a partially open position. Both the outdoor fan and the indoor fan may be actuated, while the pump 344 is deactivated.

In one or more embodiments, the space heating cycle may be initiated by the compressor 312, which compresses a fluid into a high-pressure, high-temperature vapor. The reversing valve directs the hot vapor fluid to the indoor side. The fluid flows through the open valve SV6 of the DHW system 330, bypassing the DHW TES 332.

In one or more embodiments, the hot vapor fluid from the DHW system 330 flows through the open valve SV7 to enter the indoor heat exchanger 326. With the indoor fan operating, the indoor heat exchanger 326 functions as a condenser, rejecting heat to the indoor air and providing a heating effect. The rejection of heat causes the fluid to condense into a high-pressure liquid.

In one or more embodiments, the high-pressure liquid fluid exits the indoor heat exchanger 326, passes through the indoor expansion device (TXV), and flows to the TES module 340 via the open valve SV5. The fluid flows through the open valves EXV1 and EXV2, bypassing the heating load TES 342A, the pump 344, and the cooling load TES 342B. The fluid then flows to the outdoor expansion device.

In one or more embodiments, the partially open outdoor expansion device expands the fluid into a low-pressure, low-temperature two-phase mixture. The cold, two-phase fluid enters the outdoor heat exchanger 316. With the outdoor fan operating, the outdoor heat exchanger 316 functions as an evaporator, absorbing heat from the outdoor environment and causing the fluid to evaporate into a low-pressure vapor. The resulting vapor is directed by the reversing valve to the suction line of the compressor, completing the cycle. Since the flow selection valves of the TES module 340 are closed, the TES module 340 may be fluidically isolated in the space heating mode.

In one or more embodiments, the HVAC system 500 may be operated in the space heating mode when there is a heating demand. The space heating mode may be utilized during off-peak electricity periods when the cost of power is below a first threshold, or when the heating load TES 342A is already sufficiently charged with heat.

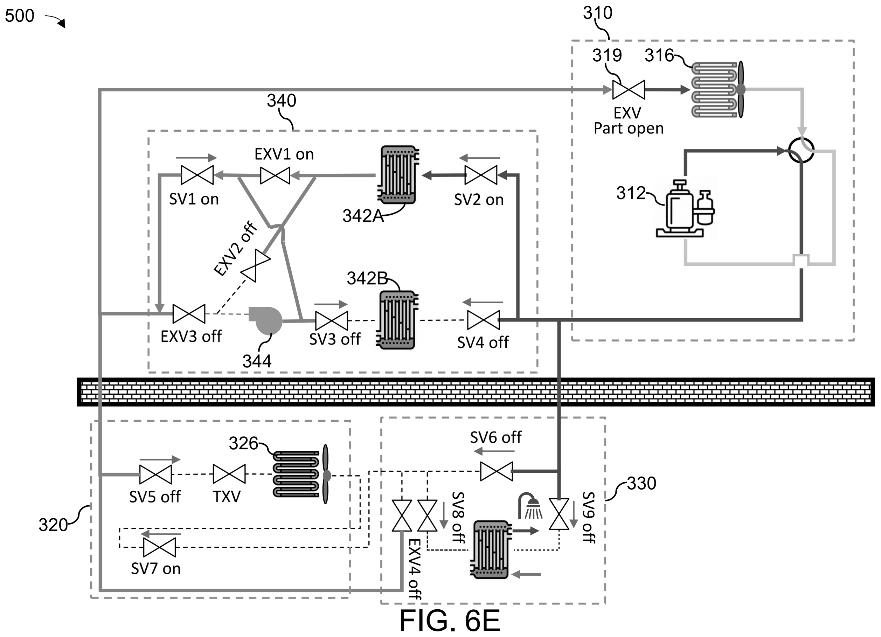

Referring to FIG. 6E, a schematic diagram of the HVAC system 500 operating in a heating charge mode is shown. In the heating charge mode, the HVAC system 500 may be configured to store heat in the heating load TES 342A. In heating charge mode, the indoor side, including the IDU 320 and the DHW system 330, is isolated. In the TES module 340, valves SV1, EXV1, EXV2, and SV2 are in an open/on position, while valves EXV3, SV3, and SV4 are in a closed/off position. In the indoor side, the valves SV6, SV5, and SV9 may be closed, to isolate the indoor side components from the outdoor side components. The outdoor expansion device (EXV) is in a partially open position. The outdoor fan is actuated, while the indoor fan and the pump 344 are deactivated.

In one or more embodiments, the heating charge mode may be initiated by the compressor 312, which compresses a fluid into a high-pressure, high-temperature vapor. The reversing valve directs the hot vapor fluid to the TES module 340 through the open valve SV2.

In one or more embodiments, the hot vapor fluid enters the heating load TES 342A. The heating load TES 342A functions as a condenser, where the fluid rejects heat to the storage medium, thereby storing heat. The rejection of heat causes the fluid to condense into a high-pressure liquid.

In one or more embodiments, the high-pressure liquid fluid exits the heating load TES 342A and flows through the open valves EXV1 and SV1. The fluid then flows to the outdoor expansion device from the valve SV1.

In one or more embodiments, the partially open outdoor expansion device expands the fluid into a low-pressure, low-temperature two-phase mixture. The cold, two-phase fluid enters the outdoor heat exchanger 316. With the outdoor fan operating, the outdoor heat exchanger 316 functions as an evaporator, absorbing heat from the outdoor environment and causing the fluid to evaporate into a low-pressure vapor. The resulting vapor is directed by the reversing valve to the suction line of the compressor to complete the cycle.

In one or more embodiments, the HVAC system 500 may be operated in the heating charge mode during off-peak electricity periods (i.e., when the cost is below the first or the second threshold). The heating charge mode allows the system 500 to store heat for later use in space heating or DHW applications, enabling energy load shifting. The heating charge mode may be terminated when the heating load TES 342A is determined to be fully charged with heat or when the low-cost energy period ends.

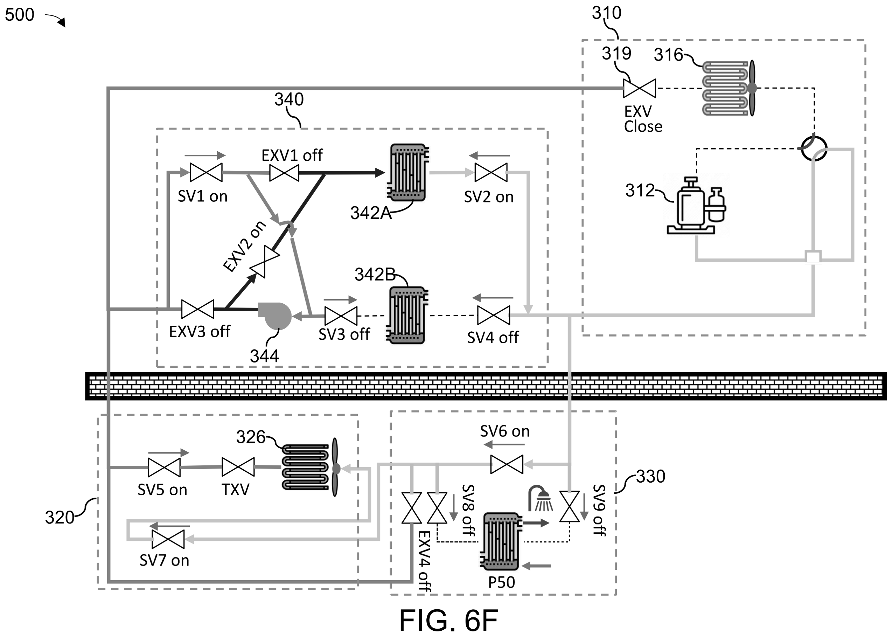

Referring to FIG. 6F, a schematic diagram of the HVAC system 500 operating in a heating discharge mode is shown. In the heating discharge mode, the HVAC system 500 may be configured to provide heating to the indoor environment by utilizing heat from the heating load TES 342A. During the heating discharge mode, the ODU 310 is isolated, with the outdoor expansion device (EXV) in a closed position and the compressor 312 and outdoor fan deactivated. The cooling load TES 342B is also isolated. In the TES module 340, valves SV1, EXV2, and SV2 are in an open/on position, while valves EXV1, EXV3, SV3, and SV4 are in a closed/off position. In the IDU 320, valves SV5 and SV7 are open. In the DHW system 330, valve SV6 is open, while valves SV8 and SV9 are closed. The pump 344 and the indoor fan 328 may be actuated.

In one or more embodiments, the heating discharge cycle may be driven by the pump 344, which circulates a fluid in a closed loop between the TES module 340 and the IDU 320. The pump 344 draws the fluid through SV1, and circulates the fluid through the open valve EXV2 into the heating load TES 342A. As the fluid passes through the heating load TES 342A, the fluid absorbs heat from the storage medium of the heating load TES 342A, exiting as a hot liquid.

In one or more embodiments, the hot liquid fluid exits the heating load TES 342A and flows through the open valve SV2 to the indoor side. The fluid passes through the open valve SV6 of the DHW system 330, bypassing the DHW TES 332 through the corresponding bypass assembly, and subsequently flows through the open valve SV7 to enter the indoor heat exchanger 326. Since the valves SV8, SV9, and/or EXV4 are closed, the fluid may be prevented from flowing into the DHW system 330 or bypass the IDU 320.

In one or more embodiments, with the indoor fan 328 operating, the indoor heat exchanger 326 functions as a condenser or radiator. The hot fluid rejects heat to the indoor air, providing a heating effect to the space. After rejecting heat, the fluid exits the indoor heat exchanger 326 as a cooled liquid. In one or more embodiments, the cooled liquid fluid passes through the indoor expansion device (TXV) and the open valve SV5. The fluid then returns to the TES module 340 to the suction side of the pump 344.

In one or more embodiments, the HVAC system 500 may be operated in the heating discharge mode during peak electricity periods or when outdoor temperatures are extremely low. By using the pump 344 instead of the compressor 312, the heating discharge mode allows the HVAC system 500 to provide space heating with significantly reduced electricity/power consumption. The heating discharge mode may be terminated when the heating demand is met or the heat in the heating load TES 342A is depleted.

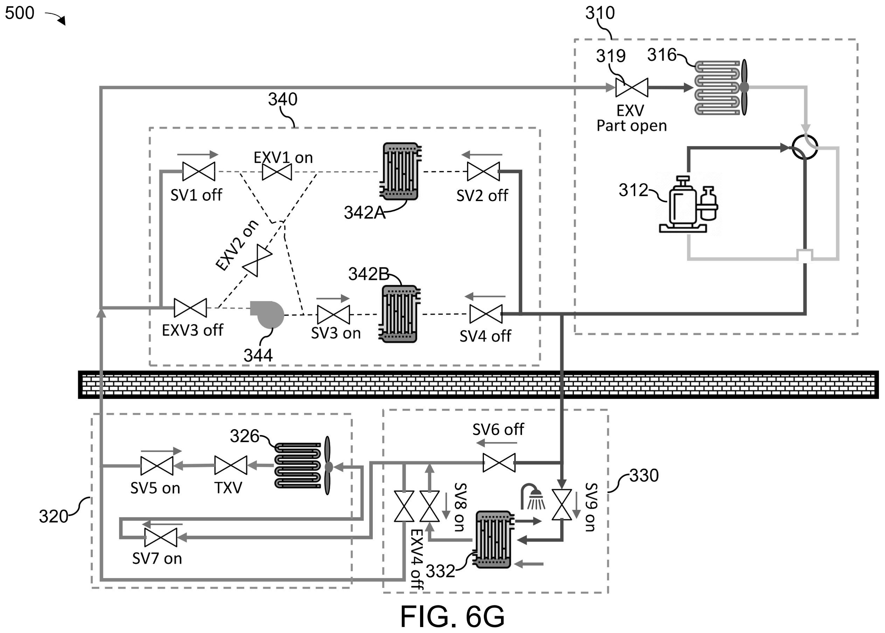

Referring to FIG. 6G, a schematic diagram of the HVAC system 500 operating in a combined space heating and DHW charging mode is shown. In the combined mode, the HVAC system 500 may be configured to provide heating to the indoor environment via the IDU 320 while simultaneously storing heat in a DHW TES 332 of the DHW system 330. During this mode, the TES module 340 is isolated, with valves SV1, EXV3, SV2, and SV4 in a closed/off position. In the IDU 320, valves SV5 and SV7 are open. In the DHW system 330, valves SV8 and SV9 are open, while valves SV6 and EXV4 are closed to prevent fluid from bypassing. The outdoor expansion device (EXV) may be in a partially open position. Both the outdoor fan and the indoor fan may be actuated, while the pump 344 is deactivated.

In one or more embodiments, the operational cycle may be initiated by the compressor 312, which compresses a fluid into a high-pressure, high-temperature vapor. The reversing valve directs the hot vapor fluid to the indoor side, where the fluid flow is split to serve both the IDU 320 and the DHW system 330.

In one or more embodiments, the hot vapor fluid flows through the open valve SV8 and into the DHW TES 332. The DHW TES 332 functions as a condenser, where the fluid rejects heat to the storage medium, thereby charging the DHW TES 332. Subsequently, the fluid is directed through the open valve SV7 to the indoor heat exchanger 326.

In one or more embodiments, with the indoor fan operating, the indoor heat exchanger 326 also functions as a condenser. The hot vapor fluid rejects heat to the indoor air, providing a heating effect to the space. The fluid from both the DHW TES 332 (after passing through the open valve SV9) and the indoor heat exchanger 326 condenses into a high-pressure liquid.

In one or more embodiments, the combined high-pressure liquid fluid passes through the indoor expansion device (TXV) and returns toward the outdoor side through the open valve SV5. The fluid then flows to the outdoor expansion device.

In one or more embodiments, the partially open outdoor expansion device expands the fluid into a low-pressure, low-temperature two-phase mixture. The cold, two-phase fluid enters the outdoor heat exchanger 316. With the outdoor fan operating, the outdoor heat exchanger 316 functions as an evaporator, absorbing heat from the ambient air and causing the fluid to evaporate into a low-pressure vapor. The resulting vapor is directed by the reversing valve to the suction line of the compressor 312. Since the valves SV1, SV2, SV4, and EXV3 are closed, the TES module 340 may be fluidically isolated from other components of the HVAC system 500.

In one or more embodiments, the HVAC system 500 may be operated in the combined space heating and DHW charging mode when there is a simultaneous demand for space heating and a need to charge the DHW TES 332. The combined mode may be utilized during off-peak periods to meet immediate heating needs while storing energy for future hot water use.

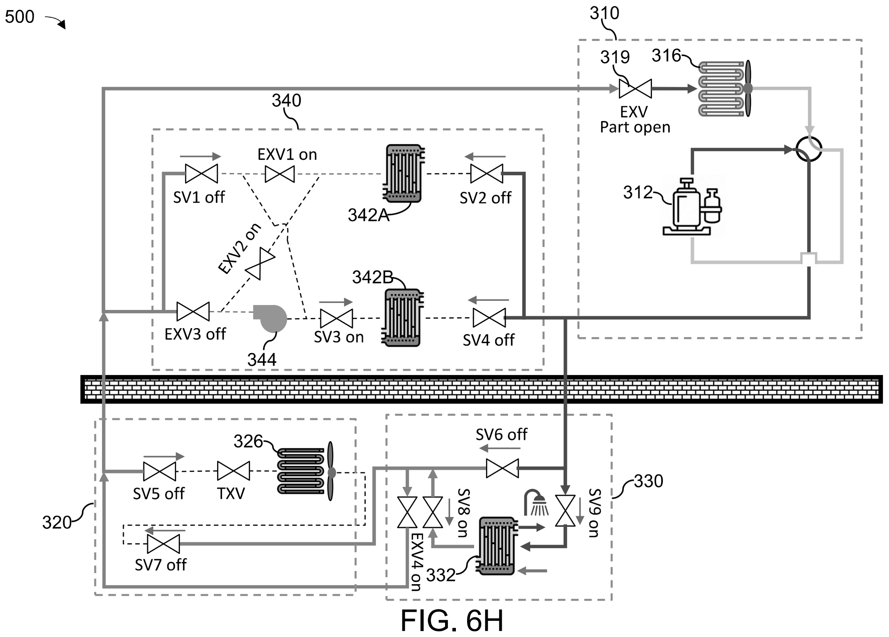

Referring to FIG. 6H, a schematic diagram of the HVAC system 500 operating in a dedicated DHW charging mode is shown. In the DHW charging mode, the HVAC system 500 may be configured to store heat in the DHW TES 332. In the DHW charging mode, both the TES module 340 and the IDU 320 are isolated. In the TES module 340, valves SV1, SV2, SV4, EXV1, EXV2, and EXV3 are in a closed/off position. In the IDU 320, valves SV5 and SV7 are also closed. In the DHW system 330, valves SV8 and SV9 are open, while valve SV6 is closed. The outdoor expansion device (EXV) may be in a partially open position. The outdoor fan may be actuated, while the indoor fan and the pump 344 are deactivated.

In one or more embodiments, the DHW charging cycle may be initiated by the compressor 312, which compresses a fluid into a high-pressure, high-temperature vapor. The reversing valve directs this hot vapor fluid to the indoor side, specifically to the DHW system 330 through the open valve SV9.

In one or more embodiments, the hot vapor fluid enters the DHW TES 332. The DHW TES 332 functions as a condenser, where the fluid rejects heat to the storage medium of the DHW TES 332, thereby charging the DHW TES 332 with heat. The rejection of heat causes the fluid to condense into a high-pressure liquid.

In one or more embodiments, the high-pressure liquid fluid exits the DHW TES 332 and flows through the open valve SV8. The fluid then returns to the outdoor side and flows through the partially open outdoor expansion device through the EXV4, bypassing the IDU 320. The expansion in the outdoor expansion device transforms the fluid into a low-pressure, low-temperature two-phase mixture.

In one or more embodiments, the cold, two-phase fluid enters the outdoor heat exchanger 316. With the outdoor fan operating, the outdoor heat exchanger 316 functions as an evaporator, absorbing heat from the ambient air and causing the fluid to evaporate into a low-pressure vapor. The resulting vapor is directed by the reversing valve to the suction line of the compressor 312.

In one or more embodiments, the HVAC system 500 may be operated in the DHW charging mode when there is a specific need to store heat for domestic hot water, particularly during off-peak electricity periods (i.e., when the cost is below the first or second threshold). The DHW charging mode allows for the efficient generation of hot water capacity for later use.

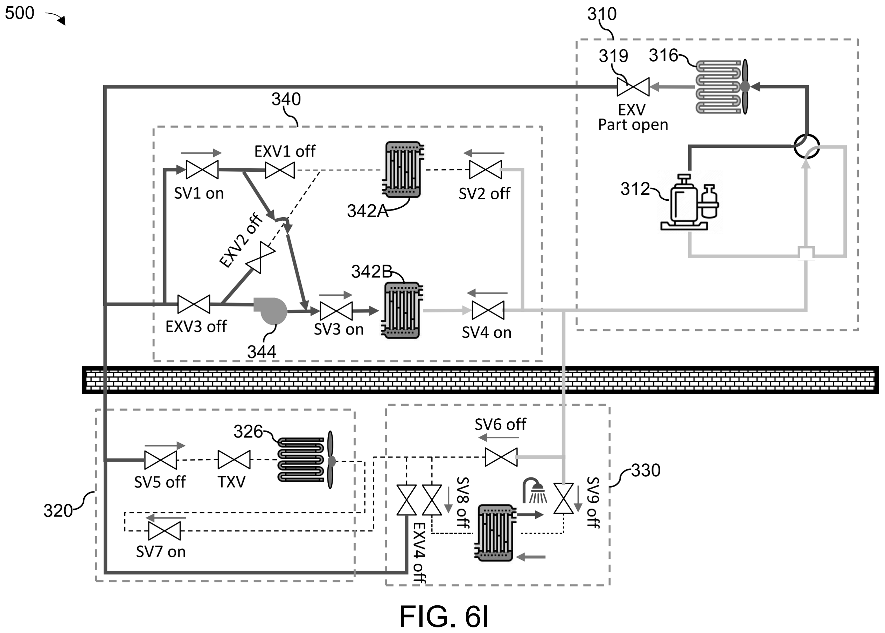

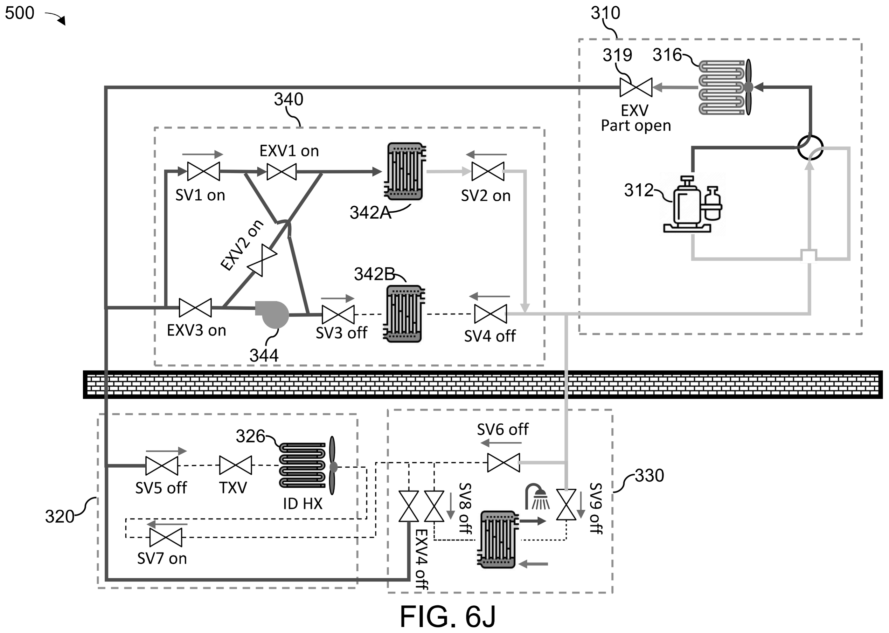

Referring to FIG. 6I and FIG. 6J, schematic diagrams of the HVAC system 500 operating in different defrost modes are shown. In the defrost modes, the HVAC system 500 may be configured to remove frost from the outdoor heat exchanger 316 by using either the cooling load TES 342B or the heating load TES 342A as a heat source.

Referring to FIG. 6I, the HVAC system 500 is shown operating in a defrost mode utilizing the cooling load TES 342B. In this defrost mode, the heating load TES 342A, the IDU 320, and the DHW system 330 are isolated. Further, valves SV3 and SV4 are in an open/on position to allow fluid flow through the cooling load TES 342B, while other valves may be closed to isolate the heating load TES 342A. The outdoor expansion device (EXV) may be in a partially open position, and the outdoor fan 318 is deactivated.

In one or more embodiments, the defrost mode may be initiated by the compressor 312, which compresses a fluid into a high-pressure, high-temperature vapor. The reversing valve directs the hot vapor fluid to the outdoor heat exchanger 316. As the hot vapor flows through the coils of the outdoor heat exchanger 316, the fluid rejects heat, which melts any accumulated frost. The fluid condenses into a high-pressure cold liquid.

In one or more embodiments, the high-pressure liquid fluid flows from the outdoor heat exchanger 316 and is expanded by the partially open outdoor expansion device, transforming the fluid into a low-pressure, two-phase mixture. The cold fluid is then directed to the cooling load TES 342B through the open valve SV3. The fluid flows through the cooling load TES 342B, which functions as an evaporator. The fluid absorbs heat from the storage medium of the cooling load TES 342B, which simultaneously provides the thermal energy for the defrost process while charging the cooling load TES 342B with cool energy. The fluid evaporates into a low-pressure vapor.

In one or more embodiments, the low-pressure vapor fluid exits the cooling load TES 342B and flows through the open valve SV4. The fluid returns to the ODU 310, where the reversing valve directs the vapor to the suction line of the compressor 312.

Referring to FIG. 6J, the HVAC system 500 is shown operating in a defrost mode utilizing the heating load TES 342A. In this defrost mode, the cooling load TES 342B, the IDU 320, and the DHW system 330 are isolated. Further, valves SV1, EXV1, EXV2, and SV2 are in an open/on position. The outdoor expansion device (EXV) may be in a partially open position, and the outdoor fan 318 is deactivated.

In one or more embodiments, the defrost cycle is initiated by the compressor 312, which circulates a high-pressure, high-temperature vapor to the outdoor heat exchanger 316 to melt frost, causing the fluid to condense into a high-pressure liquid. The liquid fluid is then expanded by the outdoor expansion device. The resulting low-pressure, two-phase fluid is directed to the heating load TES 342A through the open valve SV1 and EXV1.

In one or more embodiments, the cold, two-phase fluid enters the heating load TES 342A, which functions as an evaporator. The fluid absorbs heat from the charged heating load TES 342A, causing the fluid to evaporate into a low-pressure vapor. The low-pressure vapor exits the heating load TES 342A and flows through the open valve SV2 back to the suction line of the compressor 312.

In one or more embodiments, the ability to use either the cooling or heating TES for defrosting enhances the operational flexibility of the HVAC system 500. The HVAC system 500 may automatically select the appropriate TES based on its state of charge or other operational parameters, ensuring that a heat source is available for defrosting without interrupting indoor comfort by reversing the cycle to the IDU 320.

In one or more embodiments, while specific operational modes have been described in detail, the HVAC systems 100, 300, and 500 may also operate in a plurality of other operational modes. The described modes are intended to be exemplary and not exhaustive. A controller may be configured to actuate the various reversing valves, flow selection valves, and pumps to achieve different combinations of space conditioning, DHW TES conditioning, TES module conditioning, and the like.

In one or more embodiments, direct thermal energy transfer between the different TES units may be performed. For example, the HVAC systems 100, 300, and 500 may be operated in a mode to charge the DHW TES (such as DHW TES 132 or 332) using heat discharged from the TES module (such as TES 142 or heating load TES 342A). In such a mode, the TES module may function as an evaporator, providing heat to the fluid, while the DHW TES functions as a condenser, absorbing that heat from the fluid. Such operational mode may be advantageous in conditions where using the outdoor heat exchanger as a heat source is inefficient, such as during very low ambient temperatures. Conversely, cool energy may be transferred from the cooling load TES 342B to the DHW TES 332 if a specific application requires cooled water.

In other embodiments, alternative heat sources may be used for defrosting the outdoor heat exchanger 316. While defrosting using the heating or cooling TES has been described, alternatively, or additionally, the DHW TES (such as 332) may also be used as a heat source. If the DHW TES has sufficient heat stored, the HVAC systems 100, 300, and 500 may circulate the fluid through the DHW TES to absorb heat and then direct the resulting vapor to the outdoor heat exchanger to melt frost. This provides additional operational redundancy and flexibility, allowing the HVAC systems 100, 300, and 500 to use the most readily available or optimal heat source for defrost modes.

In one or more embodiments, the HVAC systems 100, 300, and 500 may be configured for heat reclaim operations. For instance, during a space cooling mode where the outdoor heat exchanger is rejecting a significant amount of heat to the ambient environment, a portion of the hot, high-pressure fluid from the compressor discharge line may be diverted to charge the DHW TES. This allows the HVAC systems 100, 300, and 500 to capture waste heat that is otherwise be lost, and use the captured heat for a productive purpose like heating domestic water, thereby improving the efficiency of the HVAC systems 100, 300, and 500.

In further embodiments, the HVAC systems 100, 300, and 500 may be configured to use the IDU as an alternative heat source for charging a TES module. For example, if there is a demand to charge the DHW TES (or the TES module) but no demand for space conditioning or demand for space cooling, the HVAC systems 100, 300, and 500 may operate by having the indoor heat exchanger (such as 326) function as an evaporator to absorb heat from the indoor air. The captured heat may then be transferred by the fluid to the DHW TES or the TES of the TES module, which would function as a condenser. This operational mode may be highly efficient in mild weather conditions.

In one or more embodiments, various combined charging and discharging modes are also possible. For instance, the HVAC systems 100, 300, and 500 may be configured to discharge the heating load TES 342A to provide space heating, while simultaneously operating the ODU 310 to charge the cooling load TES 342B in preparation for a future cooling demand. A controller may be programmed to select from the operational modes to optimize energy consumption, cost, and user comfort based on a variety of inputs, including sensor data, electricity tariffs, and the thermal state of each TES unit.

In one or more embodiments, the HVAC 100, 300, and/or 500 may include a controller (not shown). In one or more embodiments, the controller may be operatively coupled to different valves of the HVAC 100, 300, and/or 500. In one or more embodiments, the controller may also be operatively coupled to fans, compressors, refrigerant pumps, and/or other components of the HVAC 100, 300, and/or 500.

In one or more embodiments, the controller may include one or more processors, a memory, and an interface (not shown). The processors may be implemented as one or more microprocessors, microcomputers, microcontrollers, digital signal processors, central processing units, graphical processing units, logic circuitries, and/or any devices that manipulate data based on operational instructions. Among other capabilities, the processor may be configured to fetch and execute computer-readable instructions stored in a memory (not shown).

The memory may store the computer-readable instructions or routines, which may be fetched and executed to create or share the data units to other elements of the controller. The memory may include any non-transitory storage device including, for example, volatile memory such as Random Access Memory (RAM), or non-volatile memory such as an Erasable Programmable Read-Only Memory (EPROM), flash memory, and the like.

In one or more embodiments, the controller may be configured to control components of the HVAC 100, 300, and/or 500 by transmitting electronic (control) signals thereto. The operation of the controller may reduce operational latency between the components of the HVAC 100, 300, and/or 500, thereby improving precision of control and performance. Furthermore, the communication of the electronic control signals between the controller, and the components of the HVAC 100, 300, and/or 500 may be achieved through an encryption authorization protocol, such as Transport Layer Security (TLS), Internet Protocol Security (IPsec), Symmetric-Key Encryption, custom cryptographic protocols, Secure Boot/Trusted Platform Modules (TPMs), Hardware Security Modules (HSMs), Building Automation and Control Network (BACnet) or BACnet Secure Connect (BACnet/SC), Modbus TLS, Power line Communication and the like, but not limited thereto. This secure transmission allows for security of the controller by preventing unauthorized access by nature of the secure transmission between the controller, and other components of the HVAC 100, 300, and/or 500.

In one or more embodiments, the controller may be configured to select an operational mode from the plurality of operational modes based on at least one of a space conditioning demand, a domestic hot water demand, a cost of power, a thermal energy level of the TES module, or a thermal energy level of the DHW TES. In one or more embodiments, the controller may be communicatively coupled to a plurality of data sources. For instance, space conditioning demand may be determined from data received from indoor temperature and humidity sensors located within the conditioned space. The space conditioning demand may be received from a thermostat. Inputs from a user or an occupant may be received by the controller through the thermostat. In one or more embodiments, the DHW demand may be determined from temperature sensors within the DHW TES 332. The thermal energy levels of the TES module 340 may be determined from temperature or pressure sensors embedded within or coupled to the heating load TES 342A and the cooling load TES 342B. In one or more embodiments, the cost of power may be received from an external source via a network interface, such as a smart grid or utility provider application programming interface (API), or based on a pre-programmed time-of-use (TOU) schedule stored in the memory of the controller.

In one or more embodiments, the controller may process the received data to determine the operational mode. In some embodiments, the processing may involve rule-based logic, where the controller compares the received sensor data to predefined thresholds or setpoints stored in the memory. For example, if the indoor temperature exceeds a setpoint, the electricity cost is above a peak-rate threshold, and the thermal energy level of the cooling load TES 342B is above a discharge threshold, the controller may select the cooling discharge mode. In other embodiments, the controller may use statistical models and/or machine learning (ML) models. The ML model may be trained to predict future heating or cooling loads based on historical data, user behavior patterns, and external data such as weather forecasts. Based on the predictions by the ML model, the controller may optimize the selection and timing of operational modes to minimize energy cost while maintaining user comfort, for example, by pre-charging a TES module in anticipation of a future peak demand period.

Upon selecting an operational mode, the controller may be configured to transmit electronic control signals to actuate the various components of the HVAC system and configure the physical fluid circuit accordingly. The controller may transmit signals to the actuators of the reversing valves (such as 314), the flow selection valves (such as SV1-SV9), and the expansion valves to open, close, or modulate their positions. Simultaneously, the controller may transmit signals to activate or deactivate the pumps (such as 344) and the fans (such as the outdoor fan 318 and the indoor fan 328), and to start, stop, or modulate the speed of the compressor 312. For example, to initiate the combined space heating and DHW charging mode shown in FIG. 4G, the controller would transmit signals to open valves SV7, SV8, and SV9, close other valves like SV6, and actuate the compressor 312 and both the indoor and outdoor fans to establish the required parallel fluid paths.

While the invention is described in the context of the HVAC system having a DHW module and/or a TES module, it may be appreciated that the HVAC system may include other utility devices/units. The utility device may include other energy storage systems and/or thermal energy sources or sinks. The utility device may be selectively coupled to the flow control assemblies of the HVAC system, based on requirements and/or constraints of the use case. For instance, either one or both of the TES module or the DHW system may be coupled to the flow control assembly, which may direct the fluid through the connected utility devices based on the selected operational mode. The flow control assembly may provide an interface (such as interfaces including bidirectional inlet-outlet pipes) to selectively couple different utility devices to the ODU or the IDU, thereby providing a modular architecture.

While the invention has been described with reference to exemplary embodiments, it will be understood by those skilled in the art that various changes may be made, and equivalents may be substituted for elements thereof without departing from the scope of the invention as defined by the appended claims. Modifications may be made to adapt a particular situation or material to the teachings of the subject disclosure without departing from the scope thereof. Therefore, it is intended that the invention is not limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

Aspects of an embodiment of the subject disclosure are described in the following clauses:
Clause 1: A heating, ventilation, and air conditioning (HVAC) system coupled to a domestic hot water (DHW) system, the HVAC system comprising:
an indoor unit (IDU);
a utility device comprising at least one of: the DHW system or a thermal energy storage (TES) module;
an outdoor unit (ODU); and
a flow control assembly configured to selectively enable fluidic communication between the compressor and at least one of: the IDU, the ODU, and the utility device.

Aspects of another embodiment of the subject disclosure are described in the following clauses:
Clause 1: A heating, ventilation, and air conditioning (HVAC) system having an indoor unit (IDU), a domestic hot water (DHW) system, and an outdoor unit (ODU), the HVAC comprising:
   a thermal energy storage (TES) module comprising:
      a heating load assembly comprising a heating load TES; and
      a cooling load assembly comprising a cooling load TES,
   wherein the heating load assembly and the cooling load assembly are in selective fluidic communication with at least one of: the DHW system, the IDU, or the ODU.
Clause 2: The HVAC system of any preceding clause, wherein the heating load assembly comprises a first flow selection valve in selective fluidic communication with the DHW system, and wherein the heating load assembly comprises a second flow selection valve in selective fluidic communication with at least one of: the IDU and the ODU.
Clause 3: The HVAC system of any preceding clause, wherein the cooling load assembly comprises a first flow selection valve in selective fluidic communication with the ODU, and wherein the cooling load assembly comprises a second flow selection valve in selective fluidic communication with at least one of: the IDU and the ODU.
Clause 4: The HVAC system of any preceding clause, wherein the heating load assembly and the cooling load assembly comprise a corresponding pump, and wherein the pump is configured to circulate a fluid through the heating load TES or the cooling load TES to the IDU, respectively.
Clause 5: The HVAC system of any preceding clause, wherein at least one of: the TES module or the ODU is configured to be selectively isolated from the IDU and/or the DHW for space conditioning operational modes or TES conditioning operational modes, respectively.
Clause 6: The HVAC system of any preceding clause, wherein the heating load assembly and the cooling load assembly are arranged in parallel.
Clause 7: The HVAC system of any preceding clause, wherein the TES module comprises a flow control assembly comprising at least one flow selection valve configured to selectively enable fluidic communication from the heating load assembly and the cooling load assembly, to the ODU, the IDU, and/or the DHW system, or vice-versa.
Clause 8: The HVAC system of clause 7, wherein the flow control assembly further comprises a pump configured to circulate a fluid from at least one of: the heating load assembly and/or the cooling load assembly to at least one of: the IDU, the DHW system, and/or the ODU.
Clause 9: The HVAC system of clause 8, wherein the flow control assembly further comprises at least one diversion valve, wherein the at least one diversion valve is configured to enable selective fluidic communication between the at least one flow selection valve, the pump, and at least one of: the heating load TES or the cooling load TES.
Clause 10: The HVAC system of clause 9, wherein the at least one diversion valve fluidically cross-couples the heating load assembly and the cooling load assembly.
Clause 11: The HVAC system of clause 8, 9 or 10, wherein the at least one diversion valve is disposed between the at least one flow selection valve and at least one of: the heating load assembly and/or the cooling load assembly.
Clause 12: The HVAC system of any of clauses 7 to 11, wherein the at least one flow selection valve includes a first valve disposed upstream of the heating load TES and a second valve disposed downstream of the heating load TES, and wherein the at least one flow selection valve further includes a third valve disposed upstream of the cooling load TES and a fourth valve disposed downstream of the cooling load TES.
Clause 13: The HVAC system of any of clauses 9 to 12, wherein the at least one diversion valve is configured to selectively fluidically couple the IDU to the heating load assembly and/or the cooling load assembly.
Clause 14: The HVAC system of any of clauses 9 to 13, wherein the at least one diversion valve is arranged to create a bypass path around the pump.
Clause 15: The HVAC system of any of clauses 7 to 14, wherein the flow control assembly is disposed in an outdoor environment, and wherein the IDU and the DHW system are disposed in an indoor environment.
Clause 16: A heating, ventilation, and air conditioning (HVAC) system comprising:
   an indoor unit (IDU);
   a domestic hot water (DHW) system;
   an outdoor unit (ODU); and
   a thermal energy storage (TES) module comprising:
      a heating load assembly comprising a heating load TES; and/or
      a cooling load assembly comprising a cooling load TES,
   wherein the heating load assembly and the cooling load assembly are in selective fluidic communication with at least one of: the DHW system, the IDU, or the ODU, and wherein the heating load assembly and/or the cooling load assembly comprises a refrigerant pump and at least one unidirectional valve configured to selectively direct fluid between the refrigerant pump and/or the heating load assembly and/or the cooling load assembly.

## Claims

1. A heating, ventilation, and air conditioning, HVAC, system (100) coupled to a domestic hot water, DHW, system (130), the HVAC system (100) comprising:
an indoor unit, IDU, (120);
at least one of: the DHW system (130) and/or a thermal energy storage, TES, module (140);
an outdoor unit, ODU, (110) comprising a compressor (112) and an outdoor heat exchanger (116); and
a flow control assembly (114) comprising:
a first reversing valve (114A) and a second reversing valve (114B),
wherein the first reversing valve (114A) is configured to selectively fluidically couple at least two of: the IDU (120), the DHW system (130), the compressor (112), the TES module (140), the outdoor heat exchanger (116), and/or the second reversing valve (114B), and
wherein the second reversing valve (114B) is configured to selectively fluidically couple at least two of: the IDU (120), the TES module (140), the DHW system (130), the compressor (112), the outdoor heat exchanger (116), and/or the first reversing valve (114A).

2. The HVAC system (100) of claim 1, wherein the first reversing valve (114A) is configured to enable selective fluidic communication to a suction line of the compressor (112) from the IDU (120), the DHW system (130), the TES module (140), and/or the outdoor heat exchanger (116).

3. The HVAC system (100) of claim 1 or 2, wherein the first reversing valve (114A) is configured to enable selective fluidic communication from a discharge line of the compressor (112) to the IDU (120), the DHW system (130), the TES module (140), and/or the outdoor heat exchanger (116).

4. The HVAC system (100) of claim 1, 2 or 3, wherein the second reversing valve (114B) is configured to enable selective fluidic communication to a suction line of the compressor (112) from the TES module (140), the IDU (120), the DHW (1300), or the outdoor heat exchanger (116).

5. The HVAC system (100) of any preceding claim, wherein the second reversing valve (114B) is configured to enable selective fluidic communication from a discharge line of the compressor (112), via the first reversing valve (114A), to the outdoor heat exchanger (116), the IDU (120), the DHW system (130), or the TES module (140).

6. The HVAC system (100) of any preceding claim, wherein the second reversing valve (114B) is configured to enable selective fluidic communication from the outdoor heat exchanger (116), the IDU (120), the DHW system (130), and/or the TES module (140) to a suction line of the compressor (112) via the first reversing valve (114A).

7. The HVAC system (100) of any preceding claim, wherein the flow control assembly (114) is disposed within the ODU (110).

8. The HVAC system (100) of any preceding claim, further comprising at least one flow selection valve (SV1; SV2; SV3; SV4; SV5) disposed on a fluidic connection between at least one of: the outdoor heat exchanger (116), the IDU (120), or the DHW system (130), and at least one of: the ODU (110) or the TES module (140).

9. The HVAC system (100) of any preceding claim, wherein at least one of: the IDU (120) or the DHW system (130) comprise a corresponding bypass assembly, and wherein the bypass assembly comprises:
at least one diversion line; and
at least one flow selection valve (SV2; SV3; SV5) corresponding to the at least one diversion line, wherein the at least one flow selection valve (SV2; SV3; SV5) is configured to enable selective fluidic communication between at least one of: the outdoor heat exchanger (116), the IDU (120), or the DHW system (130), and at least one of: the ODU (110) or the TES module (140);
wherein, optionally, the at least one flow selection valve (SV2; SV3; SV5) comprises at least one of: a three-way valve or a solenoid valve assembly.

10. The HVAC system (100) of claim 9, wherein the IDU (120) is in selective fluidic communication with the corresponding bypass assembly of the DHW system (130), and wherein the DHW system (130) is in selective fluidic communication with the corresponding bypass assembly of the IDU (120).

11. The HVAC system (100) of any preceding claim, wherein the DHW system (130) comprises a DHW TES (132) and at least one flow selection valve (SV2; SV3; SV4) configured to enable selective fluidic communication between the DHW TES (132) and at least one of: the IDU (120), the TES module (140), or the ODU (110).

12. The HVAC system (100) of any preceding claim, wherein the IDU (120) comprises an indoor heat exchanger (126) and at least one flow selection valve (SV5) configured to enable selective fluidic communication between the indoor heat exchanger (126) and at least one of: the DHW system (130), the TES module (140), or the ODU (110).

13. The HVAC system (100) of any preceding claim, further comprising a controller configured to shift the HVAC system (100) between a plurality of operational modes, wherein the plurality of operational modes comprise any or a combination of: a space conditioning mode, a TES conditioning mode, and a DHW TES conditioning mode, wherein, optionally, the controller is further configured to select an operational mode from the plurality of operational modes based on at least one of: a space conditioning demand, a domestic hot water demand, cost of power, a thermal energy level of the TES module (140), or a thermal energy level of the DHW system (130).

14. A heating, ventilation, and air conditioning, HVAC, system (300; 500) comprising:
an indoor unit, IDU (320)
a domestic hot water, DHW, system (330);
an outdoor unit, ODU (310); and
a thermal energy storage, TES, module (340) comprising:
a heating load assembly (340A) comprising a heating load TES (342A); and/or
a cooling load assembly (340B) comprising a cooling load TES (342B), wherein the heating load assembly (340A) and the cooling load assembly (340B) are in selective fluidic communication with at least one of: the DHW system (330), the IDU (320), or the ODU (310).

15. A heating, ventilation, and air conditioning, HVAC, system (300; 500) comprising:
an indoor unit, IDU (320)
a domestic hot water, DHW, system (330);
an outdoor unit, ODU (310); and
a thermal energy storage, TES, module (340) comprising:
a heating load TES (342A) and a cooling load TES (342B); and
a flow control assembly (346) comprising at least one flow selection valve (SV1; SV2; SV3; SV4) and/or at least one diversion valve (EXV1; EXV2; EXV3) configured to selectively enable fluidic communication between the TES module (340) and at least one of: the DHW system (330), the IDU (320), or the ODU (310).
